(19) Europäisches Patentamt
European Patent Office
Office européen des brevets

(11) EP 3 943 543 A1

(12) EUROPEAN PATENT APPLICATION
published in accordance with Art. 153(4) EPC

(43) Date of publication:
**26.01.2022 Bulletin 2022/04**

(21) Application number: **20773586.1**

(22) Date of filing: **17.03.2020**

(51) International Patent Classification (IPC):
***C08K 7/04*** *(2006.01)* ***C08L 23/10*** *(2006.01)*
***C08K 3/013*** *(2018.01)*

(52) Cooperative Patent Classification (CPC):
**C08K 3/013; C08K 7/04; C08L 23/10**

(86) International application number:
**PCT/JP2020/011692**

(87) International publication number:
**WO 2020/189676 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2019 JP 2019051001**

(71) Applicants:
- **Mitsui Chemicals, Inc.**
  **Tokyo 105-7122 (JP)**
- **Prime Polymer Co., Ltd.**
  **Tokyo 105-7122 (JP)**

(72) Inventors:
- **ITAKURA Keita**
  **Sodegaura-shi, Chiba 299-0265 (JP)**
- **KOIKE Katsuhiko**
  **Sodegaura-shi, Chiba 299-0265 (JP)**
- **HIROI Ryoko**
  **Sodegaura-shi, Chiba 299-0265 (JP)**
- **FUKUSHIMA Hiroyuki**
  **Sodegaura-shi, Chiba 299-0265 (JP)**
- **TSURUGI Kou**
  **Sodegaura-shi, Chiba 299-0265 (JP)**
- **SHIBAHARA Atsushi**
  **Sodegaura-shi, Chiba 299-0265 (JP)**
- **NISHINO Fumiaki**
  **Sodegaura-shi, Chiba 299-0265 (JP)**
- **TANAKA Kohei**
  **Sodegaura-shi, Chiba 299-0265 (JP)**
- **KAI Yasuhiro**
  **Kuga-gun, Yamaguchi 740-0061 (JP)**
- **NODA Naoya**
  **Omuta-shi, Fukuoka 836-8610 (JP)**
- **MICHIUE Kenji**
  **Kuga-gun, Yamaguchi 740-0061 (JP)**
- **FURUTA Takanori**
  **Takaishi-shi, Osaka 592-8501 (JP)**

(74) Representative: **J A Kemp LLP**
**80 Turnmill Street**
**London EC1M 5QU (GB)**

# (54) PROPYLENE RESIN COMPOSITION, MOLDED BODY AND PROPYLENE POLYMER

(57) A propylene resin composition includes a propylene polymer (A) satisfying requirements (1) to (3) below: (1) having a number average molecular weight (Mn) measured by gel permeation chromatography (GPC) of 5000 to 22000; (2) having a ratio (Mw/Mn) of a weight average molecular weight (Mw) to a number average molecular weight (Mn) measured by gel permeation chromatography (GPC) being 1.2 to 3.5; and (3) having a proportion of a component eluted at a temperature of not more than -20°C in temperature rising elution fractionation (TREF) being not more than 3.5 mass%.

EP 3 943 543 A1

## Description

TECHNICAL FIELD

The present invention relates to a propylene resin composition, a shaped article and a propylene polymer.

BACKGROUND ART

Shaped articles obtained by injection molding propylene resin compositions have excellent mechanical properties and shaping properties and are relatively advantageous in cost performance compared to other materials, thus finding increasing use in numerous fields such as automobile parts and home appliance parts (see, for example, Patent Documents 1 to 3).

CITATION LIST

PATENT DOCUMENTS

Patent Document 1: JP 2014-214202 A
Patent Document 2: JP 2016-084387 A
Patent Document 3: JP 2007-224179 A

SUMMARY OF INVENTION

TECHNICAL PROBLEM

In recent years, environmentally friendly fuel-efficient vehicles are increasingly developed in the automobile industry. In the field of automobile materials too, there are demands for the shift from existing materials to resins and further thinning of materials for the purpose of weight reduction. Under such circumstances, great expectations exist for improvements of propylene materials that have many achievements as automobile materials such as bumper materials. The development of propylene polymers and propylene resin compositions having still enhanced rigidity is desired mainly for use as alternatives to metal materials.

In light of the conventional art discussed above, objects of the present invention are to provide a propylene polymer and a propylene resin composition that are capable of giving shaped articles with excellent rigidity, and to provide such a shaped article.

SOLUTION TO PROBLEM

The present inventors carried out extensive studies directed to realizing the above objects, and have consequently found that the objects described above may be achieved with a propylene polymer and a propylene resin composition that have a chemical makeup described below. The present invention has been completed based on the finding.

For example, the present invention pertains to the following [1] to [23].

[1] A propylene resin composition comprising a propylene polymer (A) satisfying requirements (1) to (3) below:

(1) having a number average molecular weight (Mn) measured by gel permeation chromatography (GPC) of 5000 to 22000;
(2) having a ratio (Mw/Mn) of a weight average molecular weight (Mw) to a number average molecular weight (Mn) measured by gel permeation chromatography (GPC) being 1.2 to 3.5; and
(3) having a proportion of a component eluted at a temperature of not more than -20°C in temperature rising elution fractionation (TREF) being not more than 3.5 mass%.

[2] The propylene resin composition described in [1], wherein the propylene polymer (A) has a meso pentad fraction (mmmm) determined by $^{13}$C-NMR of 90.0 to 100%.

[3] The propylene resin composition described in [1] or [2], wherein the propylene polymer (A) has a melting point

(Tm) measured with a differential scanning calorimeter (DSC) of not less than 140°C.

[4] The propylene resin composition described in any of [1] to [3], wherein the propylene polymer (A) has a total proportion of irregular bonds stemming from 2,1-insertion and 1,3-insertion in all propylene units determined by $^{13}$C-NMR being not more than 0.3 mol%.

[5] The propylene resin composition described in any of [1] to [4], wherein the propylene polymer (A) has a content of propylene-derived structural units being not less than 98.0 mol%.

[6] The propylene resin composition described in any of [1] to [5], wherein the propylene polymer (A) is in the form of propylene polymer (A) particles having a bulk density of not less than 0.20 (g/cm$^3$).

[7] The propylene resin composition described in any of [1] to [6], wherein the propylene polymer (A) is in the form of propylene polymer (A) particles having a microparticle content as measured by method (i) below of not more than 3.0 mass%:

[Method (i)]

The polymer particles are shaken on a sieve having an opening size of 100 μm for 5 minutes; the mass is measured of the polymer particles remaining on the sieve and of the polymer particles that have passed through the sieve; and the microparticle content is calculated from the following equation:

$$\text{Microparticle content (mass\%)} = W1/(W1 + W2) \times 100$$

W1: mass (g) of the polymer particles that have passed through the sieve with an opening size of 100 μm

W2: mass (g) of the polymer particles remaining on the sieve having an opening size of 100 μm.

[8] The propylene resin composition described in any of [1] to [7], which comprises 1 to 99 mass% of the propylene polymer (A) and 1 to 99 mass% of a propylene polymer (B) satisfying requirement (4) below:

(4) having a ratio (Mw/Mn) of a weight average molecular weight (Mw) to a number average molecular weight (Mn) measured by gel permeation chromatography (GPC) being 1.2 to 3.5, and having the number average molecular weight (Mn) being more than 22000.

[9] The propylene resin composition described in any of [1] to [7], which comprises 1 to 99 mass% of the propylene polymer (A) and 1 to 99 mass% of a propylene polymer (B) satisfying requirement (5) below:

(5) having a ratio (Mw/Mn) of a weight average molecular weight (Mw) to a number average molecular weight (Mn) measured by gel permeation chromatography (GPC) being more than 3.5.

[10] The propylene resin composition described in [8] or [9], wherein the propylene polymer (B) is a propylene block copolymer comprising 50 to 99 mass% of a propylene homopolymer moiety (B1) and 1 to 50 mass% of a propylene/a-olefin copolymer moiety (B2); the propylene homopolymer moiety (B1) is composed of a propylene homopolymer having a meso pentad fraction (mmmm) determined by $^{13}$C-NMR of 90.0 to 100%; and the propylene/α-olefin copolymer moiety (B2) comprises 40.0 to 90.0 mol% of propylene-derived structural units and 10.0 to 60.0 mol% of structural units derived from a C2-C20 α-olefin other than propylene.

[11] The propylene resin composition described in any of [8] to [10], wherein the propylene polymer (B) has a meso pentad fraction (mmmm) determined by $^{13}$C-NMR of 98.0 to 100%.

[12] The propylene resin composition described in any of [1] to [11], which comprises an inorganic filler in the range of 0.01 to 70 mass%.

[13] The propylene resin composition described in any of [1] to [12], which comprises inorganic fibers in the range of 0.5 to 70 mass%.

[14] The propylene resin composition described in any of [1] to [13], which comprises a nucleating agent in the range of 0.01 to 1 mass%.

[15] A shaped article formed using at least the propylene resin composition described in any of [1] to [14] .

[16] The shaped article described in [15], which is an automobile part.

[17] A propylene polymer (A) satisfying requirements (1) to (3) below:

(1) having a number average molecular weight (Mn) measured by gel permeation chromatography (GPC) of 5000 to 22000;

(2) having a ratio (Mw/Mn) of a weight average molecular weight (Mw) to a number average molecular weight (Mn) measured by gel permeation chromatography (GPC) being 1.2 to 3.5; and

(3) having a proportion of a component eluted at a temperature of not more than -20°C in temperature rising elution fractionation (TREF) being not more than 3.5 mass%.

[18] The propylene polymer (A) described in [17], which has a meso pentad fraction (mmmm) determined by $^{13}$C-

NMR of 90.0 to 100%.

[19] The propylene polymer (A) described in [17] or [18], which has a melting point (Tm) measured with a differential scanning calorimeter (DSC) of not less than 140°C.

[20] The propylene polymer (A) described in any of [17] to [19], which has a total proportion of irregular bonds stemming from 2,1-insertion and 1,3-insertion in all propylene units determined by $^{13}$C-NMR being not more than 0.3 mol%.

[21] The propylene polymer (A) described in any of [17] to [20], which has a content of propylene-derived structural units being not less than 98.0 mol%.

[22] The propylene polymer (A) described in any of [17] to [21], which is in the form of propylene polymer (A) particles having a bulk density of not less than 0.20 (g/cm3).

[23] The propylene polymer (A) described in any of [17] to [22], which is in the form of propylene polymer (A) particles having a microparticle content as measured by method (i) below of not more than 3.0 mass%:

[Method (i)]

The polymer particles are shaken on a sieve having an opening size of 100 μm for 5 minutes; the mass is measured of the polymer particles remaining on the sieve and of the polymer particles that have passed through the sieve; and the microparticle content is calculated from the following equation:

$$\text{Microparticle content (mass\%)} = W1/(W1 + W2) \times 100$$

W1: mass (g) of the polymer particles that have passed through the sieve with an opening size of 100 μm
W2: mass (g) of the polymer particles remaining on the sieve having an opening size of 100 μm.

ADVANTAGEOUS EFFECTS OF INVENTION

The propylene polymers and the propylene resin compositions according to the present invention can give shaped articles having excellent rigidity. The present invention also provides such shaped articles.

DESCRIPTION OF EMBODIMENTS

Hereinbelow, embodiments of the present invention will be described.

In the present specification, a "propylene polymer" may be a homopolymer of propylene or may be a copolymer of propylene and an additional monomer. The term "polymerization" includes concepts of both homopolymerization and copolymerization.

Details of the conditions under which properties discussed below are measured will be described in the section of Examples. The components described hereinbelow may be used singly, or two or more kinds may be used in combination unless otherwise mentioned.

[Propylene resin compositions]

A propylene resin composition of the present invention (hereinafter, also written as the "composition of the present invention") includes a propylene polymer (A) described below. In the description below, the propylene polymer (A) of the present invention will be also discussed. The composition of the present invention preferably further includes a propylene polymer (B) described hereinbelow.

(Propylene polymers (A))

The propylene polymer (A)

(1) has a number average molecular weight (Mn) measured by gel permeation chromatography (GPC) of 5000 to 22000;

(2) has a ratio (Mw/Mn) of a weight average molecular weight (Mw) to a number average molecular weight (Mn) measured by gel permeation chromatography (GPC) being 1.2 to 3.5; and

(3) has a proportion of a component eluted at a temperature of not more than -20°C in temperature rising elution fractionation (TREF) being not more than 3.5 mass%.

In the propylene polymer (A), the number average molecular weight (Mn) measured by GPC is 5000 to 22000, preferably 6000 to 21000, and more preferably 7000 to 20000. The Mn being in this range is advantageous in that the propylene resin composition attains high rigidity while maintaining mechanical strength. If the Mn is less than 5000, shaped articles that are obtained tend to exhibit low mechanical strength.

In the propylene polymer (A), the ratio (Mw/Mn) of the weight average molecular weight (Mw) to the number average molecular weight (Mn) measured by GPC is 1.2 to 3.5, preferably 1.2 to 3.2, and more preferably 1.2 to 3.0. The Mw/Mn being in this range is advantageous in that the amount of ultralow-molecular components (probably acting as components that bleed out in shaped articles) is small.

In the propylene polymer (A), the proportion of components eluted at temperatures of not more than -20°C in temperature rising elution fractionation (TREF) is not more than 3.5 mass%, preferably not more than 3.2 mass%, and more preferably not more than 3.0 mass%. Here, the amount of all the components eluted at measurement temperatures of -20 to 130°C in TREF is taken as 100 mass%. When the proportion of the above eluted components is in the above range, the propylene polymer (A) tends to attain an enhancement in heat resistance and shaped articles that are obtained tend to be enhanced in mechanical properties such as flexural modulus that is an index of rigidity.

In the propylene polymer (A), the meso pentad fraction (mmmm) determined by $^{13}C$-NMR is preferably 90.0 to 100%, more preferably 96.0 to 100%, and still more preferably 97.0 to 100%. In an embodiment, the upper limit of mmmm may be 99.9%, 99.5% or 99.0%. The mmmm being not less than the lower limit described above is advantageous from the point of view of heat resistance.

The meso pentad fraction indicates the proportion of quintuplet isotactic structures present in the molecular chains, and is the fraction of the propylene units each at the center of a sequence composed of five consecutive meso-propylene units.

In the propylene polymer (A), the melting point (Tm) measured with a differential scanning calorimeter (DSC) is preferably not less than 140°C, more preferably 143 to 170°C, and still more preferably 150 to 160°C. The Tm being not less than the lower limit described above is advantageous from the point of view of heat resistance.

In the propylene polymer (A), the total proportion of irregular bonds stemming from 2,1-insertion and 1,3-insertion of propylene monomers in all the propylene units determined by $^{13}C$-NMR is preferably not more than 0.3 mol%, and more preferably not more than 0.1 mol%. The total proportion of irregular bonds being in this range is advantageous in that the amount of low-crystalline and ultralow-molecular components (probably inhibiting the rigidity improving effects) is small.

In the propylene polymer (A), the content of propylene-derived structural units is preferably not less than 98.0 mol%, and more preferably not less than 99.0 mol% in all the repeating structural units taken as 100 mol%. This content may be measured by, for example, carbon nuclear magnetic resonance analysis ($^{13}C$-NMR).

The propylene polymer (A) may be a homopolymer of propylene or may be a copolymer of propylene and an additional monomer. Examples of the additional monomers include C2-C20 $\alpha$-olefins other than propylene such as ethylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene. These may be used singly, or two or more may be used in combination.

Among the polymers described above, propylene homopolymer, propylene/ethylene copolymer, propylene/1-butene copolymer, propylene/1-hexene copolymer, propylene/4-methyl-1-pentene copolymer, propylene/1-octene copolymer, propylene/ethylene/1-butene copolymer, propylene/ethylene/1-hexene copolymer, propylene/ethylene/4-methyl-1-pentene copolymer, and propylene/ethylene/1-octene copolymer are preferable.

The propylene polymers (A) may be used singly, or two or more may be used in combination.

The content of the propylene polymer (A) in the composition of the present invention is usually 1 to 99 mass%, preferably 1 to 97 mass%, more preferably 1 to 50 mass%, and still more preferably 1 to 25 mass%.

((Methods for producing propylene polymers (A)))

The propylene polymer (A) is preferably a polymer produced by homopolymerizing propylene or copolymerizing propylene with an additional monomer in the presence of a metallocene catalyst.

(Metallocene compounds)

The metallocene catalyst is usually a polymerization catalyst that includes a metallocene compound having a ligand such as a cyclopentadienyl skeleton in its molecule. Examples of the metallocene compounds include metallocene compounds (I) represented by the formula (I) and bridged metallocene compounds (II) represented by the formula (II), with the bridged metallocene compounds (II) being preferable.

[Chem. 1]

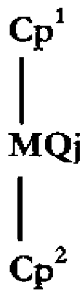 ---- (I) 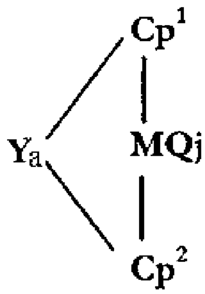 ---- (II)

In the formulas (I) and (II), M is a Group IV transition metal in the periodic table, preferably titanium, zirconium or hafnium, and more preferably zirconium; Q is a halogen atom, a hydrocarbon group, a C10 or lower neutral, conjugated or nonconjugated diene, an anionic ligand or a neutral ligand capable of coordination with a lone electron pair; j is an integer of 1 to 4; and $Cp^1$ and $Cp^2$, which may be the same as or different from each other, are each a cyclopentadienyl group or a substituted cyclopentadienyl group and form a sandwich structure together with M in between.

Examples of the substituted cyclopentadienyl groups include indenyl group, fluorenyl group, and azulenyl group, and the above groups and cyclopentadienyl group that have one or more substituents such as halogen atoms, hydrocarbon groups, silicon-containing groups and halogenated hydrocarbon groups. When the substituted cyclopentadienyl group is an indenyl group, a fluorenyl group or an azulenyl group, part of the double bonds in the unsaturated ring condensed to the cyclopentadienyl group may be hydrogenated.

In the formula (II), Ya is a C1-C20 divalent hydrocarbon group, a C1-C20 divalent halogenated hydrocarbon group, a divalent silicon-containing group, - Ge-, a divalent germanium-containing group, -Sn-, a divalent tin-containing group, -O-, -CO-, -S-, -SO-, $-SO_2-$, $-NR^a-$, $-P(R^a)-$, $-P(O)(R^a)-$, $-BR^a-$ or $-AlR^a-$. $R^a$ is a hydrogen atom, a C1-C20 hydrocarbon group, a halogen atom or a C1-C20 halogenated hydrocarbon group, or is an amino group to which one or two C1-C20 hydrocarbon groups are bonded. Part of Ya may bond to $Cp^1$ and/or $Cp^2$ to form a ring.

The metallocene compound is preferably a bridged metallocene compound (III) represented by the formula (III) .

[Chem. 2]

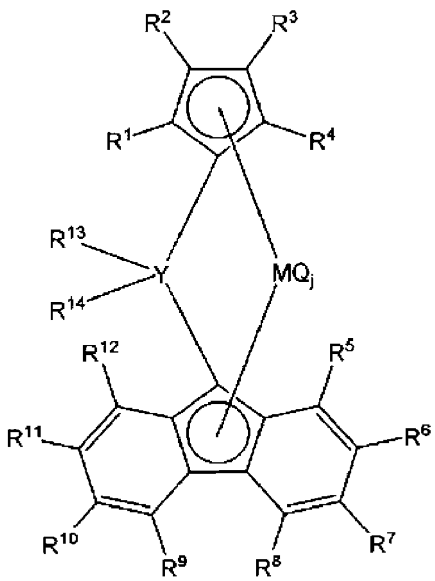 · · · (III)

In the formula (III), $R^1$ to $R^{14}$ are each independently a hydrogen atom, a halogen atom, a hydrocarbon group, a silicon-containing group or a halogenated hydrocarbon group, and preferably a hydrogen atom or a hydrocarbon group. Y is a Group XIV element, preferably carbon, silicon or germanium, and more preferably carbon. M is a Group IV transition metal in the periodic table, preferably titanium, zirconium or hafnium, and more preferably zirconium. Q is a halogen atom, a hydrocarbon group, a C10 or lower neutral, conjugated or nonconjugated diene, an anionic ligand or a neutral

ligand capable of coordination with a lone electron pair. The letter j is an integer of 1 to 4, and preferably 2. When j is 2 or greater, the plurality of Q may be the same as or different from one another.

Specific examples of the atoms and groups represented by $R^1$ to $R^{14}$ are as follows.

Examples of the halogen atoms include fluorine, chlorine, bromine and iodine.

Examples of the hydrocarbon groups include linear or branched hydrocarbon groups such as alkyl groups and alkenyl groups; cyclic saturated hydrocarbon groups such as cycloalkyl groups and polycyclic saturated hydrocarbon groups; cyclic unsaturated hydrocarbon groups such as aryl groups, cycloalkenyl groups and polycyclic unsaturated hydrocarbon groups; and saturated hydrocarbon groups having a cyclic unsaturated hydrocarbon group as their substituent such as aryl-substituted alkyl groups. The number of carbon atoms in the hydrocarbon groups is usually 1 to 20, preferably 1 to 15, and more preferably 1 to 10.

Examples of the silicon-containing groups include groups represented by the formula $-SiR_3$ (wherein the plurality of R are each independently an alkyl group having 1 to 15 carbon atoms, preferably 1 to 3 carbon atoms, or a phenyl group).

Examples of the halogenated hydrocarbon groups include groups resulting from the substitution of the hydrocarbon groups described above with a halogen atom in place of one, or two or more hydrogen atoms, such as alkyl halide groups.

Adjacent substituents among $R^5$ to $R^{12}$ may bond to each other to form a ring. Specifically, for example, there may be formed a benzofluorenyl group, a dibenzofluorenyl group, an octahydrodibenzofluorenyl group, an octamethyloctahydrodibenzofluorenyl group or an octamethyltetrahydrodicyclopentafluorenyl group. In this case, it is particularly preferable that $R^6$, $R^7$, $R^{10}$ and $R^{11}$ on the fluorene ring be not hydrogen atoms at the same time.

$R^{13}$ and $R^{14}$ may bond to each other to form a ring, or may bond to an adjacent group of $R^5$ to $R^{12}$ or to an adjacent group of $R^1$ to $R^4$ to form a ring.

Regarding Q, examples of the halogen atoms include fluorine, chlorine, bromine and iodine; and examples of the hydrocarbon groups include alkyl groups having 1 to 10 carbon atoms, preferably 1 to 5 carbon atoms, and cycloalkyl groups having 3 to 10 carbon atoms, preferably 5 to 8 carbon atoms.

Examples of the C10 or lower neutral, conjugated or nonconjugated dienes include s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, and s-cis- or s-trans-$\eta^4$-1,4-bis(trimethylsilyl)-1,3-butadiene.

Examples of the anionic ligands include alkoxy groups such as methoxy and t-butoxy; aryloxy groups such as phenoxy; carboxylate groups such as acetate and benzoate; and sulfonate groups such as mesylate and tosylate.

Examples of the neutral ligands capable of coordination with a lone electron pair include organophosphorus compounds such as trimethylphosphine, triethylphosphine, triphenylphosphine and diphenylmethylphosphine; and ethers such as tetrahydrofuran, diethyl ether, dioxane and 1,2-dimethoxyethane.

Q is preferably a halogen atom or a C1-C5 alkyl group.

Specific examples of the metallocene compounds include those compounds described in literature such as WO 2001/27124, WO 2005/121192, WO 2006/025540, WO 2014/050817, WO 2014/123212 and WO 2017/150265.

The metallocene compound is more preferably a bridged metallocene compound (IV) of the formula (IV) described in literature such as WO 2014/050817.

[Chem. 3]

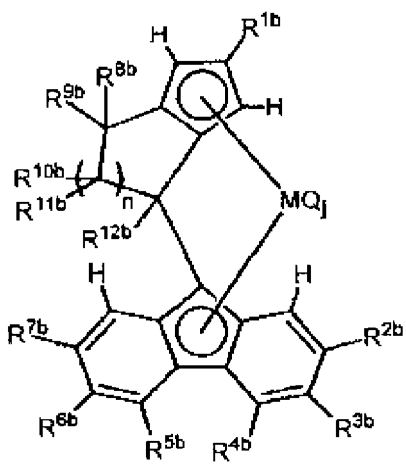

... (IV)

In the formula (IV), $R^{1b}$ is a hydrocarbon group, a silicon-containing group or a halogenated hydrocarbon group. $R^{2b}$ to $R^{12b}$ are selected from hydrogen atom, halogen atoms, hydrocarbon groups, silicon-containing groups and halogenated hydrocarbon groups and may be the same as or different from one another, and these substituents may bond to one another to form a ring. The letter n is an integer of 1 to 3. M is a Group IV transition metal in the periodic table. Q is a halogen atom, a hydrocarbon group, a C10 or lower neutral, conjugated or nonconjugated diene, an anionic ligand or a neutral ligand capable of coordination with a lone electron pair. The letter j is an integer of 1 to 4, and preferably 2. When j is 2 or greater, the plurality of Q may be the same as or different from one another.

Referring to the formula (IV), specific examples of the halogen atoms, the hydrocarbon groups, the silicon-containing groups, the halogenated hydrocarbon groups, the Group IV transition metals in the periodic table, and the halogen atoms, hydrocarbon groups, C10 or lower neutral, conjugated or nonconjugated dienes, anionic ligands and neutral ligands capable of coordination with a lone electron pair that are each represented by Q include those described with respect to the formula (III).

Among the substituents $R^{2b}$ to $R^{12b}$, two substituents may bond to each other to form a ring, and two or more such rings may be formed in the molecule. Examples of the rings (spiro rings, additional rings) formed by bonding of two substituents include alicyclic rings and aromatic rings. Specific examples include cyclohexane ring, benzene ring, hydrogenated benzene ring and cyclopentene ring, with cyclohexane ring, benzene ring and hydrogenated benzene ring being preferable. Further, such a ring structure may have an additional substituent such as an alkyl group on its ring.

From the point of view of stereoregularity, $R^{1b}$ is preferably a hydrocarbon group, more preferably a C1-C20 hydrocarbon group, still more preferably a linear hydrocarbon group, a branched hydrocarbon group or a cyclic saturated hydrocarbon group, and particularly preferably a substituent in which the carbon having a free valence (the carbon bonded to the cyclopentadienyl ring) is a tertiary carbon.

Specific examples of $R^{1b}$ include methyl group, ethyl group, isopropyl group, tert-butyl group, tert-pentyl group, tert-amyl group, 1-methylcyclohexyl group and 1-adamantyl group. More preferable are substituents in which the carbon having a free valence is a tertiary carbon, such as tert-butyl group, tert-pentyl group, 1-methylcyclohexyl group and 1-adamantyl group. Tert-butyl group and 1-adamantyl group are particularly preferable.

$R^{4b}$ and $R^{5b}$ are preferably each a hydrogen atom.

$R^{2b}$, $R^{3b}$, $R^{6b}$ and $R^{7b}$ are preferably each a hydrogen atom or a hydrocarbon group, more preferably a hydrocarbon group, and still more preferably a C1-C20 hydrocarbon group. $R^{2b}$ and $R^{3b}$ may bond to each other to form a ring, and $R^{6b}$ and $R^{7b}$ may bond to each other to form a ring. Examples of such substituted fluorenyl groups include benzofluorenyl group, dibenzofluorenyl group, octahydrodibenzofluorenyl group, 1,1,4,4,7,7,10,10-octamethyl-2,3,4,7,8,9,10,12-octahydro-1H-dibenzo[b,h]fluorenyl group, 1,1,3,3,6,6,8,8-octamethyl-2,3,6,7,8,10-hexahydro-1H-dicyclopenta[b,h]fluorenyl group and l',l',3',6',8',8'-hexamethyl-1'H,8'H-dicyclopenta[b,h]fluorenyl group, with 1,1,4,4,7,7,10,10-octamethyl-2,3,4,7,8,9,10,12-octahydro-1H-dibenzo[b,h]fluorenyl group being particularly preferable.

$R^{8b}$ is preferably a hydrogen atom.

$R^{9b}$ is preferably a hydrocarbon group, more preferably a C2 or higher alkyl group, a cycloalkyl group or a cycloalkenyl group, and still more preferably a C2 or higher alkyl group.

From the point of view of synthesis, it is also preferable that $R^{10b}$ and $R^{11b}$ be each a hydrogen atom.

In other cases, it is more preferable that when n = 1, $R^{9b}$ and $R^{10b}$ bond to each other to form a ring, and it is particularly preferable that the ring be a 6-membered ring such as a cyclohexane ring. In this case, $R^{11b}$ is preferably a hydrogen atom.

In other cases, $R^{8b}$ and $R^{9b}$ may be each a hydrocarbon group.

$R^{12b}$ is preferably a hydrocarbon group, and more preferably an alkyl group.

The letter n is an integer of 1 to 3, preferably 1 or 2, and more preferably 1.

For example, particularly preferred metallocene compounds represented by the formula (IV) are (8-octamethylfluoren-12'-yl-(2-(adamantan-1-yl)-8-methyl-3, 3b, 4, 5, 6, 7, 7a, 8-octahydrocyclopenta[a]indene)) zirconium dichloride, [3-(2',7'-di-tert-butylfluorenyl)(1,1,3-trimethyl-5-(1-adamantyl)-1,2,3,3a-tetrahydropentalene)]zirconium dichloride and (8-(2,3,6,7-tetramethylfluoren)-12'-yl-(2-(adamantan-1-yl)-8-methyl-3, 3b, 4, 5, 6, 7, 7a, 8-octahydrocyclopenta[a]indene)) zirconium dichloride. Here, the octamethylfluorene is 1,1,4,4,7,7,10,10-octamethyl-2,3,4,7,8,9,10,12-octahydro-1H-dibenzo[b,h]fluorene.

(Cocatalysts)

The metallocene catalyst preferably further includes at least one compound (cocatalyst) selected from organometallic compounds, organoaluminum oxy compounds, and compounds capable of reacting with the metallocene compound to form an ion pair.

Examples of the organometallic compounds (except organoaluminum oxy compounds) include organoaluminum compounds, specifically, organoaluminum compounds represented by the general formula $R^a_mAl(OR^b)_nH_pX_q$ (wherein $R^a$ and $R^b$ may be the same as or different from each other and are each a hydrocarbon group having 1 to 15

carbon atoms, preferably 1 to 4 carbon atoms, X is a halogen atom, m is $0 < m \leq 3$, n is $0 \leq n < 3$, p is $0 \leq p < 3$, q is $0 \leq q < 3$, and $m + n + p + q = 3$). Specific examples include trialkylaluminums such as trimethylaluminum, triethylaluminum, triisobutylaluminum and tri-n-octylaluminum, dialkylaluminum hydrides such as diisobutylaluminum hydride, and tricycloalkylaluminums such as tricyclohexylaluminum.

The organoaluminum oxy compounds may be conventionally known aluminoxanes or may be benzene-insoluble organoaluminum oxy compounds such as those described in JP H02-78687 A. Specific examples include methylaluminoxane.

Suitable aluminoxanes are solid aluminoxanes serving as solid cocatalyst components. For example, solid aluminoxanes disclosed in WO 2010/055652, WO 2013/146337 and WO 2014/123212 are particularly suitably used.

The term "solid" means that the solid aluminoxane substantially stays in the solid state in a reaction environment in which the aluminoxane is used. More specifically, when, for example, the components for constituting the metallocene catalyst are brought into contact with one another to form a solid catalyst component, the aluminoxane stays in the solid state in an inert hydrocarbon medium such as hexane or toluene used in the reaction in a specific temperature-pressure environment.

The solid aluminoxane preferably comprises an aluminoxane that has at least one kind of structural units selected from structural units represented by the formula (1) and structural units represented by the formula (2); more preferably comprises an aluminoxane that has structural units represented by the formula (1); and more preferably comprises polymethylaluminoxane that consists solely of structural units represented by the formula (1).

[Chem. 4]

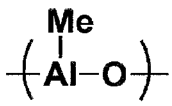 · · · (1)

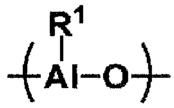 · · · (2)

In the formula (1), Me is a methyl group.

In the formula (2), $R^1$ is a C2-C20 hydrocarbon group, preferably a C2-C15 hydrocarbon group, and more preferably a C2-C10 hydrocarbon group. Examples of the hydrocarbon groups include alkyl groups such as ethyl, propyl, n-butyl, pentyl, hexyl, octyl, decyl, isopropyl, isobutyl, sec-butyl, tert-butyl, 2-methylbutyl, 3-methylbutyl, 2-methylpentyl, 3-methylpentyl, 4-methylpentyl, 2-methylhexyl, 3-methylhexyl and 2-ethylhexyl; cycloalkyl groups such as cyclohexyl and cyclooctyl; and aryl groups such as phenyl and tolyl.

The structure of the solid aluminoxane is not necessarily clear but probably has, in a usual case, about 2 to 50 repetitions of the structural units represented by the formula (1) and/or the formula (2). However, the structure is not limited thereto. The manner in which the structural units are bonded is variable and is, for example, linear, cyclic or clustered, and the aluminoxane is probably usually a single such aluminoxane or a mixture of such aluminoxanes. The aluminoxane may consist solely of the structural units represented by the formula (1) or the formula (2).

The solid aluminoxane is preferably a solid polymethylaluminoxane, and is more preferably solid polymethylaluminoxane consisting solely of the structural units represented by the formula (1).

The solid aluminoxane is usually in the form of particles and preferably has a volume median diameter (D50) of 1 to 500 $\mu$m, more preferably 2 to 200 $\mu$m, and still more preferably 5 to 50 $\mu$m. For example, D50 may be determined by a laser diffraction/scattering method using Microtrac MT3300EX II manufactured by Microtrac.

In the solid aluminoxane, the uniformity index described in the section of Examples later is usually not more than 0.40, preferably not more than 0.30, and more preferably not more than 0.27. The lower limit of the uniformity index is not particularly limited and may be, for example, 0.15. A larger uniformity index indicates wider particle size distribution.

In the solid aluminoxane, the specific surface area is preferably 100 to 1000 $m^2/g$, and more preferably 300 to 800 $m^2/g$. The specific surface area may be determined from the BET adsorption isotherm equation utilizing the adsorption and desorption phenomena of gas on the solid surface.

For example, the solid aluminoxane may be prepared by the method described in WO 2010/055652 or WO 2014/123212.

Examples of the compounds capable of reacting with the metallocene compound to form an ion pair include Lewis acids, ionic compounds, borane compounds and carborane compounds described in literature such as JP H01-501950 A, JP H01-502036 A, JP H03-179005 A, JP H03-179006 , JP H03-207703 A, JP H03-207704 A and US

5321106. Examples further include heteropoly compounds and isopoly compounds.

(Carriers)

The metallocene catalyst may further include a carrier. The carrier is preferably in the form of particles, and the metallocene compound is immobilized on the surface and/or in the inside of the carrier, thus forming the metallocene catalyst. The catalyst of such a form is generally called a metallocene supported catalyst.
The solid aluminoxane described hereinabove functions as a carrier. Thus, the use of the solid aluminoxane may eliminate the use of the carrier, for example, a solid inorganic carrier such as silica, alumina, silica-alumina or magnesium chloride, or a solid organic carrier such as polystyrene beads.
The carrier is, for example, an inorganic or organic compound. Examples of the solid inorganic carriers include inorganic compound carriers such as porous oxides, inorganic halides, clays, clay minerals and ion-exchangeable layered compounds. Examples of the solid organic carriers include such carriers as polystyrene beads.
Examples of the porous oxides include oxides such as $SiO_2$, $Al_2O_3$, MgO, $ZrO_2$, $TiO_2$, $B_2O_3$, CaO, ZnO, BaO and $ThO_2$, and composites and mixtures including these oxides, for example, natural or synthetic zeolites, $SiO_2$-MgO, $SiO_2$-$Al_2O_s$, $SiO_2$-$TiO_2$, $SiO_2$-$V_2O$ , $SiO_2$-$Cr_2O_3$ and $SiO_2$-$TiO_2$-MgO.
Examples of the inorganic halides include $MgCl_2$, $MgBr_2$, $MnCl_2$ and $MnBr_2$. The inorganic halide may be used directly or may be used after being pulverized with a ball mill or a vibration mill. Alternatively, the inorganic halide may be dissolved into a solvent such as alcohol and then precipitated into fine particles with a precipitant.
The clays are usually composed of clay minerals as main components. The ion-exchangeable layered compounds are compounds having a crystal structure in which planes formed by bonds such as ionic bonds are stacked in parallel on top of one another with a weak bond strength, and in which the ions contained therein are exchangeable. Most clay minerals are ion-exchangeable layered compounds. Examples of the clays, the clay minerals and the ion-exchangeable layered compounds include clays, clay minerals and ion crystalline compounds having a layered crystal structure such as a hexagonal closest packed structure, an antimony structure, a $CdCl_2$ structure or a $CdI_2$ structure.
It is also preferable that the clays and the clay minerals be subjected to chemical treatment. Any chemical treatments may be used, with examples including surface treatment that removes impurities on the surface and treatment that modifies the crystal structure of the clay. Specific examples of the chemical treatments include acid treatments, alkali treatments, salt treatments and organic treatments.
The carrier preferably has a volume median diameter (D50) of 1 to 500 $\mu$m, more preferably 2 to 200 $\mu$m, and still more preferably 5 to 50 $\mu$m. For example, the volume D50 may be determined by a laser diffraction/scattering method using Microtrac MT3300EX II manufactured by Microtrac.

(Organic compound components)

The metallocene catalyst may further include an organic compound component as required. The organic compound component is used as required for the purpose of enhancing the polymerization performance and properties of a polymer that is obtained. Examples of the organic compound components include alcohols, phenolic compounds, carboxylic acids, phosphorus compounds, amides, polyethers and sulfonate salts.

(Polymerization conditions)

On the solid catalyst component in which the metallocene compound is supported on the carrier such as a solid cocatalyst component, an olefin such as an $\alpha$-olefin may be prepolymerized (a prepolymerized catalyst component). An additional catalyst component may be supported on the solid catalyst component carrying such a prepolymer.
In the polymerization of propylene, the manner and order in which the components for the metallocene catalyst are used and added may be selected appropriately. In the polymerization of propylene using the metallocene catalyst, the components for constituting the catalyst may be used in the following amounts.
The metallocene compound is usually used in such an amount that the concentration thereof per liter of the reaction volume will be $10^{-10}$ to $10^{-2}$ mol, preferably $10^{-9}$ to $10^{-3}$ mol.
The organometallic compound as a cocatalyst may be usually used in such an amount that the molar ratio [organometallic compound/M] of the compound to the transition metal atoms (M; that is, the Group IV transition metal in the periodic table) in the metallocene compound will be 10 to 10000, preferably 30 to 2000, and more preferably 50 to 500.
The organoaluminum oxy compound as a cocatalyst may be usually used in such an amount that the molar ratio [Al/M] of aluminum atoms (Al) in the compound to the transition metal atoms (M) in the metallocene compound will be 10 to 10000, preferably 30 to 2000, and more preferably 50 to 500.
The compound capable of reacting with the metallocene compound to form an ion pair (the ion pair-forming

compound) as a cocatalyst may be usually used in such an amount that the molar ratio [ion pair-forming compound/M] of the compound to the transition metal atoms (M) in the metallocene compound will be 1 to 10000, preferably 2 to 2000, and more preferably 10 to 500.

The propylene polymer (A) may be obtained by polymerizing at least propylene in the presence of the metallocene catalyst described above.

The polymerization may be carried out by any of liquid-phase polymerization processes such as solution polymerization and suspension polymerization, and gas-phase polymerization processes. In the liquid-phase polymerization processes, inert organic solvents may be used as the polymerization solvents, with examples including aliphatic hydrocarbons such as propane, butane, pentane, hexane, heptane, octane, decane, dodecane and kerosine; alicyclic hydrocarbons; aromatic hydrocarbons; and halogenated hydrocarbons. The olefin itself such as propylene may be used as the polymerization medium.

Hydrogen molecules may be added to the polymerization system in order to control the molecular weight of the polymer. When hydrogen is added to the system, the amount thereof is appropriately about 0.00001 to 100 NL per mole of the olefin. Other than by adjusting the amount of hydrogen supplied, the hydrogen concentration in the system may be controlled by performing a hydrogen-forming or hydrogen-consuming reaction in the system, separating hydrogen with a membrane, or discharging part of gas containing hydrogen out of the system.

The organometallic compound (except the organoaluminum oxy compound) described hereinabove may be further added for the purpose of making up for the poisoning of the polymerization catalyst component in the polymerization system. When such an organometallic compound is added to the system, the amount thereof is usually $10^{-6}$ to 0.1 mol, and preferably $10^{-5}$ to $10^{-2}$ mol per liter of the reaction volume.

Further, an antistatic agent may be added to the polymerization system. Some preferred antistatic agents are polypropylene glycol, polypropylene glycol distearate, ethylenediamine-polyethylene glycol (PEG)-polypropylene glycol (PPG) block copolymer, stearyldiethanolamine, lauryldiethanolamine, alkyldiethanolamides and polyoxyalkylenes (for example, polyethylene glycol-polypropylene glycol-polyethylene glycol block copolymer (PEG-PPG-PEG)). Polyoxyalkylene (PEG-PPG-PEG) is particularly preferable. The antistatic agent is usually used in such an amount that the ratio (g/mol) of the mass (g) to 1 mol of the transition metal atoms (M) in the metallocene compound will be 100 to 100,000, and preferably 100 to 10,000.

The polymerization may be carried out, for example, at a temperature of 20 to 150°C, preferably 50 to 100°C, under a pressure of atmospheric pressure to 10 MPa/G, preferably atmospheric pressure to 5 MPa/G. The polymerization may be performed batchwise, semi-continuously or continuously. The polymerization may be carried out in two or more stages under different reaction conditions.

(Propylene polymer (A) particles)

The propylene polymer (A) of the present invention is preferably in the form of particles, which are also written as the "propylene polymer (A) particles" hereinbelow.

The propylene polymer (A) particles have a number average molecular weight (Mn) of 5000 to 22000 as measured by GPC. The Mn is preferably not less than 6000, and more preferably not less than 7000. The Mn is preferably not more than 21000, and more preferably not more than 20000. The Mn being in this range is advantageous in that the propylene resin composition attains high rigidity while maintaining mechanical strength. If the Mn is less than 5000, shaped articles that are obtained tend to exhibit low mechanical strength.

In the propylene polymer (A) particles, the ratio (Mw/Mn) of the weight average molecular weight (Mw) to the number average molecular weight (Mn) measured by GPC is 1.2 to 3.5, preferably 1.2 to 3.2, and more preferably 1.2 to 3.0. The Mw/Mn being in this range is advantageous in that the amount of ultralow-molecular components (probably acting as components that bleed out in shaped articles) is small.

In the propylene polymer (A) particles, the proportion of components eluted at temperatures of not more than -20°C in temperature rising elution fractionation (TREF) is not more than 3.5 mass%, preferably not more than 3.2 mass%, and more preferably not more than 3.0 mass%. Here, the amount of all the components eluted at measurement temperatures of -20 to 130°C in TREF is taken as 100 mass%. When the proportion of the above eluted components is in the above range, the propylene polymer (A) tends to attain an enhancement in heat resistance and shaped articles that are obtained tend to be enhanced in mechanical properties such as flexural modulus that is an index of rigidity.

In the propylene polymer (A) particles, the meso pentad fraction (mmmm) determined by $^{13}C$-NMR is preferably 90.0 to 100%, more preferably 96.0 to 100%, and still more preferably 97.0 to 100%. In an embodiment, the upper limit of mmmm may be 99.9%, 99.5% or 99.0%. The mmmm being not less than the lower limit described above is advantageous from the point of view of heat resistance.

The meso pentad fraction indicates the proportion of quintuplet isotactic structures present in the molecular chains, and is the fraction of the propylene units each at the center of a sequence composed of five consecutive meso-propylene units.

In the propylene polymer (A) particles, the melting point (Tm) measured with a differential scanning calorimeter (DSC) is preferably not less than 140°C, more preferably 143 to 170°C, and still more preferably 150 to 160°C. The Tm being not less than the lower limit described above is advantageous from the point of view of heat resistance.

According to $^{13}C$-NMR of the propylene polymer (A), the total proportion of irregular bonds stemming from 2,1-insertion and 1,3-insertion of propylene monomers in all the propylene units is preferably not more than 0.3 mol%, and more preferably not more than 0.1 mol%. The total proportion of irregular bonds being in this range is advantageous in that the amount of low-crystalline and ultralow-molecular components (probably inhibiting the rigidity improving effects) is small.

In the propylene polymer (A) particles, the content of propylene-derived structural units is preferably not less than 98.0 mol%, and more preferably not less than 99.0 mol% in all the repeating structural units taken as 100 mol%. This content may be measured by, for example, carbon nuclear magnetic resonance analysis ($^{13}C$-NMR).

The propylene polymer (A) particles may be a homopolymer of propylene or may be a copolymer of propylene and an additional monomer. Examples of the additional monomers include C2-C20 α-olefins other than propylene such as ethylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene. These may be used singly, or two or more may be used in combination.

For example, the propylene polymer (A) particles of the present invention may be produced using a solid catalyst component in which a metallocene compound is supported on a carrier such as a solid cocatalyst component, and are characterized by having excellent particle properties. The bulk density and the microparticle content are known as indicators of particle properties. In general, polymer particles having a low bulk density include a large amount of coarse polymer and cause problems during the polymer production such as the blockage of polymer outlets and polymer transfer lines. These facts make industrial production difficult in some cases. Further, polymer particles including a large amount of microparticles cause fouling by the attachment of electrostatically charged polymer particles, and are therefore sometimes difficult to produce on an industrial scale. In contrast, polymer particles having a high bulk density and a low microparticle content, that is, polymer particles having excellent particle properties may be produced efficiently without problems such as reactors and pipes being fouled or clogged by the polymer during the production. Thus, excellent particle properties represented by high bulk density and low microparticle content are very important in industrial production of polymer particles. Further, polymer particles having excellent particle properties are also advantageous in that good workability is obtained when packing or handling the particles produced.

The bulk density of the propylene polymer (A) particles is preferably not less than 0.20 (g/$cm^3$), more preferably not less than 0.25 (g/$cm^3$), still more preferably not less than 0.28 (g/$cm^3$), and most preferably not less than 0.30 (g/$cm^3$). The upper limit of the bulk density is not particularly limited but is, for example, 0.55 (g/$cm^3$), and preferably 0.52 (g/$cm^3$).

When the propylene polymer (A) particles are shaken on a sieve having an opening size of 100 μm, the microparticle content that is mass% of the polymer particles that have passed through the sieve is preferably not more than 3.0 mass%, more preferably not more than 2.0 mass%, still more preferably not more than 1.5 mass%, and most preferably not more than 1.0 mass%.

(Propylene polymers (B))

The propylene polymer (B) satisfies the following requirement (4) or (5). (4) having a ratio (Mw/Mn) of a weight average molecular weight (Mw) to a number average molecular weight (Mn) measured by gel permeation chromatography (GPC) being 1.2 to 3.5, and having the number average molecular weight (Mn) being more than 22000.

In the requirement (4), the Mw/Mn is preferably 1.5 to 3.5, and more preferably 2.0 to 3.5. The Mw/Mn being in this range is advantageous in that the propylene resin composition satisfies both impact resistance and shaping properties. In the requirement (4), the Mn is preferably 30000 to 170000, and more preferably 32000 to 150000. The Mn being in this range is advantageous in that the propylene resin composition satisfies both impact resistance and shaping properties.

(5) having a ratio (Mw/Mn) of a weight average molecular weight (Mw) to a number average molecular weight (Mn) measured by gel permeation chromatography (GPC) being more than 3.5.

In the requirement (5), the Mw/Mn is preferably 4.0 to 20, more preferably 4.2 to 15, and still more preferably 4.4 to 10. The Mw/Mn being in this range is advantageous in that the propylene resin composition attains an enhanced balance between rigidity and impact resistance.

In the propylene polymer (B), the meso pentad fraction (mmmm) determined by $^{13}C$-NMR is preferably 98.0 to 100%. In an embodiment, the upper limit of mmmm may be 99.9% or 99.5%. The mmmm being not less than the lower limit described above is advantageous from the point of view of heat resistance. The mmmm of the propylene polymer (B) may be not less than 90.0%.

In the propylene polymer (B), the MFR (ASTM D1238, measurement temperature: 230°C, load: 2.16 kg) is preferably 0.5 to 1000 g/10 min, more preferably 1.0 to 800 g/10 min, and still more preferably 1.5 to 500 g/10 min. When

the MFR is in the above range, the resin composition attains an excellent balance between shaping properties and mechanical strength.

The propylene polymer (B) may be a homopolymer of propylene or may be a copolymer, such as a random copolymer or a block copolymer, of propylene and an additional monomer. In the case of a copolymer of propylene and an additional monomer, the content of propylene-derived structural units is preferably not less than 90 mol% and less than 100 mol% of all the repeating structural units taken as 100 mol%. This content may be measured by, for example, carbon nuclear magnetic resonance analysis ($^{13}$C-NMR).

Examples of the additional monomers include C2-C20 α-olefins other than propylene, such as ethylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene, with ethylene being preferable. These may be used singly, or two or more may be used in combination.

In an embodiment, the propylene polymer (B) is a propylene homopolymer.

In an embodiment, the propylene polymer (B) is a random copolymer, for example, a propylene/a-olefin random copolymer. In the case of a random copolymer, the content of propylene-derived structural units is preferably not less than 91 mol% and less than 100 mol%, and more preferably 93 to 99 mol% of all the repeating structural units taken as 100 mol%. This content may be measured by, for example, carbon nuclear magnetic resonance analysis ($^{13}$C-NMR).

In an embodiment, the propylene polymer (B) is a block copolymer, for example, a propylene block copolymer composed of a propylene homopolymer moiety (B1) and a propylene/a-olefin copolymer moiety (B2).

In the homopolymer moiety (B1), the meso pentad fraction (mmmm) determined by $^{13}$C-NMR is usually 90.0 to 100%, preferably 95.0 to 100%, and more preferably 97.0 to 100%. In an embodiment, the upper limit of mmmm may be 99.9% or 99.5%. The mmmm being not less than the lower limit described above is advantageous from the point of view of heat resistance.

The copolymer moiety (B2) is composed of a copolymer of propylene and a C2-C20 α-olefin other than propylene. Specific examples of the α-olefins are as described above, with ethylene being preferable.

The copolymer moiety (B2) includes propylene-derived structural units in the range of 40.0 to 90.0 mol%, preferably 50.0 to 90.0 mol%, and more preferably 55.0 to 85.0 mol%, and includes structural units derived from a C2-C20 α-olefin other than propylene in the range of 10.0 to 60.0 mol%, preferably 10.0 to 50.0 mol%, and more preferably 15.0 to 45.0 mol%. Here, the total of the propylene-derived structural units and the α-olefin-derived structural units is taken as 100 mol%. These contents may be measured by, for example, carbon nuclear magnetic resonance analysis ($^{13}$C-NMR).

The propylene block copolymer preferably contains the propylene homopolymer moiety (B1) in the range of 50 to 99 mass%, more preferably 60 to 99 mass%, and still more preferably 70 to 95 mass%, and the propylene/a-olefin copolymer moiety (B2) in the range of 1 to 50 mass%, more preferably 1 to 40 mass%, and still more preferably 5 to 30 mass%. Here, the total of (B1) and (B2) is taken as 100 mass%. The propylene/a-olefin copolymer moiety (B2) usually corresponds to a 23°C n-decane-soluble component of the propylene block copolymer.

In the propylene block copolymer, the propylene/α-olefin copolymer moiety (B2) usually has an intrinsic viscosity [η] measured in decalin at 135°C of 1.0 to 12 dL/g, preferably 1.5 to 11 dL/g, and more preferably 2.0 to 10 dL/g.

By using the propylene block copolymer, shaped articles that are formed may attain high heat resistance and an excellent balance between rigidity and impact resistance.

The propylene polymers (B) may be used singly, or two or more may be used in combination.

The content of the propylene polymer (B) in the composition of the present invention is usually 1 to 99 mass%, preferably 50 to 99 mass%, and more preferably 75 to 99 mass%. In an embodiment, the content of the propylene polymer (B) may be not more than 97 mass%.

((Methods for producing propylene polymers (B)))

The propylene polymer (B) may be produced by any method without limitation and may be prepared by, for example, homopolymerizing propylene or copolymerizing propylene and an additional monomer in the presence of a Ziegler-Natta catalyst or a metallocene catalyst. Examples of the catalysts include those catalysts described in literature such as JP 2014-214202 A, JP 2016-084387 A, WO 2019/004418 and JP 2007-224179 A. Regarding the conditions in the production of the propylene polymer (B), reference may be made to the literature above, for example, paragraphs [0053] to [0077] of JP 2014-214202 A, paragraphs [0052] to [0075] of JP 2016-084387 A, and paragraphs [0100] to [0110] of WO 2019/004418.

(Additional components)

While still achieving the objects of the present invention, the composition of the present invention may include additional components other than the components described above. Examples of such additional components include

resins, rubbers, inorganic fillers, nucleating agents, heat stabilizers, weather stabilizers, antistatic agents, antislip agents, antiblocking agents, antifogging agents, lubricants, pigments, dyes, plasticizers, antiaging agents, hydrochloric acid absorbers and antioxidants.

《Additional resins and rubbers》

Examples of the additional resins and rubbers include random copolymers of ethylene and a C3-C20 α-olefin (hereinafter, also written as the "ethylene random copolymer (C)"). The ethylene random copolymer (C) usually includes ethylene-derived structural units in the range of 50 to 95 mol%, preferably 55 to 90 mol%, and α-olefin-derived structural units in the range of 5 to 50 mol%, preferably 10 to 45 mol% of all the repeating structural units taken as 100 mol%. These contents of the structural units may be measured by, for example, carbon nuclear magnetic resonance analysis ($^{13}C$-NMR). By using the ethylene random copolymer (C), shaped articles that are obtained may attain a further enhancement in impact resistance.

Examples of the C3-C20 α-olefins include propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene. These may be used singly, or two or more may be used in combination. Among these, propylene, 1-butene, 1-hexene and 1-octene are preferable, and 1-butene and 1-octene are more preferable.

The MFR (ASTM D1238E, measurement temperature: 190°C, load: 2.16 kg) of the ethylene random copolymer (C) is preferably 0.1 to 50 g/10 min, more preferably 0.3 to 20 g/10 min, and still more preferably 0.5 to 10 g/10 min. The density of the ethylene random copolymer (C) is preferably 850 to 920 kg/$m^3$, and more preferably 855 to 900 kg/$m^3$.

The random copolymers (C) may be used singly, or two or more may be used in combination.

In an embodiment, the content of the ethylene random copolymer (C) in the composition of the present invention is preferably 1 to 40 mass%, more preferably 3 to 30 mass%, and still more preferably 5 to 25 mass%.

《Inorganic fillers》

Examples of the inorganic fillers include talc, clay, mica, calcium carbonate, magnesium hydroxide, ammonium phosphate salt, silicate salts, carbonate salts, carbon blacks; and inorganic fibers such as magnesium sulfate fibers, glass fibers and carbon fibers.

The inorganic fillers may be used singly, or two or more may be used in combination.

In an embodiment, the content of the inorganic filler in the composition of the present invention is preferably 0.01 to 70 mass%, more preferably 0.5 to 70 mass%, still more preferably 1 to 40 mass%, and particularly preferably 3 to 30 mass%.

《Nucleating agents》

Examples of the nucleating agents include organic nucleating agents such as phosphate nucleating agents (organic phosphoric acid metal salts), sorbitol nucleating agents, metal salts of aromatic carboxylic acids, metal salts of aliphatic carboxylic acids and rosin compounds; and inorganic nucleating agents such as inorganic compounds.

Examples of the commercially available nucleating agents include phosphate nucleating agent "ADK STAB NA-11" (manufactured by ADEKA CORPORATION), sorbitol nucleating agent "Millad NX8000" (manufactured by Milliken), aliphatic carboxylic acid metal salt nucleating agent "Hyperform HPN-20E" (manufactured by Milliken) and rosin compound nucleating agent "PINECRYSTAL KM1610" (manufactured by ARAKAWA CHEMICAL INDUSTRIES, LTD.).

The nucleating agents may be used singly, or two or more may be used in combination.

In an embodiment, the content of the nucleating agent in the composition of the present invention is preferably 0.01 to 1 mass%, more preferably 0.02 to 0.8 mass%, and still more preferably 0.03 to 0.5 mass%.

〈Methods for producing propylene resin compositions〉

The propylene resin composition of the present invention may be produced by mixing the components described hereinabove. The components may be added sequentially in any order or may be mixed together at the same time. Alternatively, a multistage mixing method may be adopted in which part of the components are mixed and thereafter the remaining part of the components are mixed.

For example, the components may be added in such a manner that the components are mixed or melt-kneaded simultaneously or sequentially using a mixing device such as a Banbury mixer, a single-screw extruder, a twin-screw extruder or a high-speed twin-screw extruder.

In the composition of the present invention, the MFR (ASTM D1238, measurement temperature: 230°C, load: 2.16 kg) is preferably 1 to 200 g/10 min, more preferably 3 to 160 g/10 min, and still more preferably 5 to 120 g/10 min. When the MFR is in the above range, the resin composition attains an excellent balance between shaping properties and mechanical strength. In an embodiment, the MFR of the composition may be 1 to 300 g/10 min.

[Shaped articles]

A shaped article of the present invention is formed using at least the composition of the present invention described hereinabove.

The shaped articles of the present invention may be suitably used in various fields such as, for example, automobile parts, home appliance parts, food containers and medical containers, and are particularly suitable as automobile parts. Examples of the automobile parts include automobile interior and exterior members such as bumpers, pillars and instrumental panels; automobile functional members such as engine fans and fan shrouds; and outer panels such as roofs, door panels and fenders.

The shaped articles of the present invention may be formed by any methods without limitation. Any of various known methods for shaping resin compositions may be adopted. Injection molding and press molding are particularly preferable.

EXAMPLES

Hereinafter, the present invention will be described in greater detail based on Examples. However, it should be construed that the scope of the present invention is not limited to such Examples. In the following description, "parts by mass" is simply written as "parts" unless otherwise specified.

[Methods for measuring properties]

Intrinsic viscosity ([η])

With automated kinematic viscosity measuring device VMR-053PC and a modified Ubbelohde capillary viscometer manufactured by RIGO CO., LTD., the specific viscosity ηsp in decalin at 135°C was measured. The intrinsic viscosity ([η]) was calculated using the following equation.

$$[\eta] = \eta sp/\{C(1 + K \cdot \eta sp)\}$$

(C: solution concentration [g/dl], K: constant)

Gel permeation chromatography (GPC)

Gel permeation chromatography (GPC) was performed with the device described below under the conditions described below, and the chromatogram obtained was analyzed by a known method to calculate values of Mw, Mn and Mw/Mn.

(GPC measurement device)

Liquid chromatograph: HLC-8321GPC/HT manufactured by TOSOH CORPORATION
Detector: RI
Columns: Two TOSOH GMHHR-H(S)HT columns manufactured by TOSOH CORPORATION were connected in series.

(Measurement conditions)

Mobile phase medium: 1,2,4-Trichlorobenzene
Flow rate: 1.0 ml/min
Measurement temperature: 145°C
Calibration curve preparation: A calibration curve was prepared using standard polystyrene samples.
Molecular weight conversion: The molecular weight was converted from PS (polystyrene) to PP (polypropylene) by a universal calibration method.
Sample concentration: 5 mg/10 ml

Sample solution volume: 300 μl

Temperature rising elution fractionation (TREF)

Temperature rising elution fractionation (TREF) was performed under the following measurement conditions, and the proportion of components eluted at not more than -20°C was calculated.

Device: CFC2 type cross fractionation chromatograph manufactured by Polymer Char
Detector: IR4 type infrared spectrophotometer (built-in) manufactured by Polymer Char
Mobile phase: o-Dichlorobenzene, BHT added
Flow rate: 1.0 mL/min
Sample concentration: 90 mg/30 mL
Injection volume: 0.5 mL
Dissolution conditions: 145°C, 30 min
Stabilization conditions: 135°C, 30 min
Cooling rate: 1.0°C/min
Elution sections: -20°C to 0°C in 10°C increments, 0°C to 80°C in 5°C increments, 80°C to 104°C in 3°C increments, 104 to 130°C in 2°C increments
Elution time: 3 min

Meso pentad fraction (mmmm)

The pentad fraction (mmmm, %) is one of the indicators of polymer stereoregularity and is determined by studying the microtacticity. The pentad fraction of a propylene polymer was calculated from an intensity ratio of peaks in a $^{13}$C-NMR spectrum assigned based on Macromolecules 8, 687 (1975). The $^{13}$C-NMR spectrum was measured with EX-400 manufactured by JEOL Ltd. at a temperature of 130°C using o-dichlorobenzene solvent and TMS as a reference.

Chemical makeup of polymers (irregular bonds)

The amounts of 2,1-insertion bonds and of 1,3-insertion bonds were measured by $^{13}$C-NMR in accordance with the method described in JP H07-145212 A.

Ethylene content in propylene/ethylene copolymers

To determine the concentration of ethylene-derived skeletons, a sample weighing 20 to 30 mg was dissolved into 0.6 ml of a 1,2,4-trichlorobenzene/deuterated benzene (2:1) solution, and the solution was subjected to carbon nuclear magnetic resonance analysis ($^{13}$C-NMR). Propylene and ethylene were quantitatively determined based on the diad sequence distribution. In the case of a propylene/ethylene copolymer, the amounts were calculated from the following equations wherein PP = $S\alpha\alpha$, EP = Say + $S\alpha\beta$, and EE = 1/2($S\beta\delta$ + $S\delta\delta$) + 1/4$S\gamma\delta$.

$$\text{Propylene (mol\%)} = (PP + 1/2EP) \times 100/[(PP + 1/2EP) + (1/2EP + EE)$$

$$\text{Ethylene (mol\%)} = (1/2EP + EE) \times 100/[(PP + 1/2EP) + (1/2EP + EE)$$

Melting point (Tm)

The Tm of a propylene polymer was measured using a differential scanning calorimeter (DSC, manufactured by PerkinElmer). Here, the endothermic peak at the third step was defined as the melting point (Tm).

(Measurement conditions)

First step: The temperature is raised to 230°C at 10°C/min and held for 10 minutes.
Second step: The temperature is lowered to 30°C at 10°C/min.
Third step: The temperature is raised to 230°C at 10°C/min.

Amount of decane-soluble components

Approximately 3 g of a propylene block copolymer (the weight was measured to the unit of $10^{-4}$ g; this weight being written as b (g) in the equation below), 500 ml of n-decane and a small amount of a heat stabilizer soluble in n-decane were added into a glass measurement container. In a nitrogen atmosphere, the temperature was raised to 150°C in 2 hours while performing stirring with a stirrer, to allow the propylene block copolymer to be dissolved. The temperature was held at 150°C for 2 hours and was then gradually lowered to 23°C over a period of 8 hours. The resultant liquid containing a precipitate of the propylene block copolymer was filtered under reduced pressure through a 25G-4 standard glass filter manufactured by Iwata Glass. A 100 ml portion of the filtrate was collected and was dried under reduced pressure to give part of the decane-soluble components. The weight thereof was measured to the unit of $10^{-4}$ g (this weight is written as a (g) in the equation below). After these operations, the amount of decane-soluble components was determined from the following equation.

$$\text{Content of 23°C decane-soluble components (Dsol)} = 100 \times (500 \times a)/(100 \times b)$$

Melt flow rate (MFR)

The melt flow rate was measured in accordance with ASTM D1238 at a measurement temperature of 230°C under a load of 2.16 kg.

Bulk density

The bulk density was measured by Method A specified in ASTM D 1895-96.

Microparticle content

Polymer particles were shaken on a sieve having an opening size of 100 μm for 5 minutes, and the mass was measured of the polymer particles remaining on the sieve and of the polymer particles that had passed through the sieve. The microparticle content was calculated from the following equation:

$$\text{Microparticle content (mass\%)} = W1/(W1 + W2) \times 100$$

W1: Mass (g) of the polymer particles that had passed through the sieve with an opening size of 100 μm.
W2: Mass (g) of the polymer particles remaining on the sieve having an opening size of 100 μm.

Zirconium content in prepolymerized catalyst components

The zirconium content in a prepolymerized catalyst component was measured using an ICP emission spectroscopic analyzer (ICPS-8100) manufactured by SHIMADZU CORPORATION. A sample was wet-decomposed with sulfuric acid and nitric acid, and the volume was adjusted to a predetermined volume (filtration and dilution were performed where necessary). The test solution thus obtained was analyzed, and the zirconium content was determined from a calibration curve prepared using standard samples having a known concentration.

Volume median diameter (D50), particle size distribution and uniformity of solid cocatalyst components

The volume median diameter (median diameter, D50) and particle size distribution of a solid cocatalyst component were determined by a laser diffraction/scattering method using Microtrac MT3300EX II manufactured by Microtrac. In the measurement of the particle size distribution, the solid cocatalyst component was inactivated beforehand in a wet desiccator under a stream of nitrogen to give a sample. Methanol was used as the main dispersion medium.
The uniformity of the solid cocatalyst component particles was evaluated based on the uniformity index represented by the following equation.

$$\text{Uniformity index} = \sum Xi|D50 - Di|/D50\sum Xi$$

In the equation, Xi indicates the histogram value of a particle i in the particle size distribution measurement, D50 the volume median diameter, and Di the volume diameter of the particle i. The Xi, D50 and Di of the solid cocatalyst component particles were determined by the laser diffraction/scattering method.

Unless otherwise mentioned, all Examples were carried out in a dry nitrogen atmosphere using a dry solvent.

[Synthesis Example 1] Synthesis of transition metal complex (metallocene compound (M))

In accordance with Synthesis Example 4 of WO 2014/050817, (8-octamethylfluoren-12'-yl-(2-(adamantan-1-yl)-8-methyl-3,3b,4,5,6,7,7a,8-octahydrocyclopenta[a]indene))zirconium dichloride (metallocene compound (M-1)) was synthesized.

[Preparation 1 of solid cocatalyst component]

A solid polyaluminoxane composition for use as a solid cocatalyst component was prepared based on a known method (WO 2014/123212). Specifically, a 1 L glass autoclave equipped with a stirrer was charged with 40 mL of toluene, and a 20 mass% toluene solution of polymethylaluminoxane manufactured by Albemarle (Al concentration = 2.95 mmol/mL, 166 mL, 490 mmol). The temperature was then increased to 45°C while performing stirring. Subsequently, a toluene solution (20.5 mL) of n-octanophenone (14.7 g, 71.8 mmol) was added over a period of 80 minutes. After the addition, the mixture was stirred at 45°C for 30 minutes, heated to 115°C at a heat-up rate of 0.80°C/min, and reacted at 115°C for 30 minutes. Thereafter, the mixture was heated to 150°C at a heat-up rate of 0.58°C/min, and reacted at 150°C for 150 minutes. After the reaction, the mixture was cooled to room temperature. The slurry thus obtained was filtered through a filter, and the powder on the filter was washed with dehydrated toluene three times. Thereafter, dehydrated toluene was added. Thus, a toluene slurry of a solid polyaluminoxane composition as a solid cocatalyst component was obtained.

The particle size distribution of the solid polyaluminoxane composition obtained was measured. The volume median diameter (D50) was 9.8 μm, and the uniformity index was 0.237.

[Preparation 1 of solid catalyst component (metallocene catalyst)]

A 200 mL three-necked flask thoroughly purged with nitrogen and equipped with a stirrer was charged, under a stream of nitrogen, with 17.8 mL of purified hexane and 20.5 mL of the toluene slurry of the solid cocatalyst component synthesized above (2.00 g in terms of solid of the solid polyaluminoxane composition (the solid cocatalyst component)). A suspension was thus prepared. Thereafter, the temperature was increased to 35°C while performing stirring. Subsequently, 80.0 mg (8.0 mL as a 10 mg/mL toluene solution) of the previously synthesized metallocene compound (M-1) was added while performing stirring. The reaction was performed for 60 minutes. Thereafter, 3.75 mL of a toluene solution of triisobutylaluminum (1 mol/L in terms of aluminum atoms) was added, and the reaction was carried out for 60 minutes. The temperature was lowered to room temperature and stirring was terminated. The supernatant (17 mL) was removed by decantation. The solid catalyst component thus obtained was washed with hexane (75 mL) three times at room temperature, and then the total volume was adjusted to 50 mL by the addition of hexane.

[Preparation of prepolymerized catalyst component (BPP)]

Under a stream of nitrogen, 2.0 mL of a toluene solution of triisobutylaluminum (1 mol/L in terms of aluminum atoms) was added to the slurry of the solid catalyst component prepared as described above. Thereafter, the mixture was cooled to 20°C and ethylene (6.3 g) was fed over a period of 6 hours. After the completion of the feeding of ethylene, stirring was terminated. The mixture was washed by decantation with hexane at room temperature (washing efficiency: 98%) and was formed into 50 mL of a hexane slurry. A 10 mL portion of the obtained slurry was filtered through a filter, and the powder on the filter was washed twice with 10 mL of dehydrated hexane. The washed powder was dried under reduced pressure for 2 hours to give a prepolymerized catalyst component (BPP-1) as a powder. The powder was mixed together with mineral oil to give a mineral oil slurry having a concentration of the prepolymerized catalyst component of 9.98 mass%. The zirconium content in the prepolymerized catalyst component (BPP-1) was measured to be 0.087 mass%.

[Propylene polymerization]

[Polymerization Example A-1]

A 3.4 L internal volume SUS autoclave thoroughly purged with nitrogen was charged with a mixture of 159.6 mg of the mineral oil slurry of the prepolymerized catalyst component (BPP-1) prepared as described above and 1.5 mL of a decane solution of triethylaluminum (A1 = 0.5 M) . Next, 750 g of liquid propylene and 8.1 L of hydrogen were fed. Polymerization was performed at 70°C for 40 minutes while performing sufficient stirring. The resultant polymer was dried under reduced pressure at 80°C for 10 hours. Thus, 166.6 g of a propylene polymer (A-1) was obtained.

[Polymerization Example A-2]

A 3.4 L internal volume SUS autoclave thoroughly purged with nitrogen was charged with a mixture of 165.7 mg of the mineral oil slurry of the prepolymerized catalyst component (BPP-1) prepared as described above and 1.5 mL of a decane solution of triethylaluminum (Al = 0.5 M). Next, 750 g of liquid propylene and 10.6 L of hydrogen were fed. Polymerization was performed at 70°C for 40 minutes while performing sufficient stirring. The resultant polymer was dried under reduced pressure at 80°C for 10 hours. Thus, 180.9 g of a propylene polymer (A-2) was obtained.

[Preparation 2 of solid cocatalyst component]

A solid polyaluminoxane composition for use as a solid cocatalyst component was prepared based on a known method (WO 2014/123212). Specifically, a 1 L glass autoclave equipped with a stirrer was charged with 55 mL of toluene, and a 20 mass% toluene solution of polymethylaluminoxane manufactured by Albemarle (Al concentration = 2.97 mmol/mL, 192 mL, 570.2 mmol). The temperature was then increased to 70°C while performing stirring. Subsequently, a toluene solution (24.5 mL) of benzaldehyde (9.10 g, 85.8 mmol) was added over a period of 80 minutes. After the addition, the mixture was stirred at 70°C for 10 minutes, heated to 140°C at a heat-up rate of 1.0°C/min, and reacted at 140°C for 4 hours. The temperature was lowered to 80°C, and the supernatant (125 mL) was removed by decantation. The solid polyaluminoxane that had precipitated was washed twice with toluene (400 mL) at 80°C, and the total volume was adjusted to 300 mL by the addition of toluene. A toluene slurry of the solid polyaluminoxane composition was thus obtained.

The particle size distribution of the solid polyaluminoxane composition obtained was measured. The volume median diameter (D50) was 22.7 μm, and the uniformity index was 0.278.

[Preparation 2 of solid catalyst component (metallocene catalyst)]

A reactor was charged with the toluene slurry of the solid polyaluminoxane composition prepared as described above (Al concentration = 1.65 mmol/mL, 2.45 mL, 4.05 mmol) and 16.0 mL of toluene. There was added 1.00 mL of a toluene solution containing 10.0 mg of the metallocene compound (M-1) from Synthesis Example 1. The mixture was stirred at room temperature for 1 hour. The slurry thus obtained was filtered through a filter, and the powder on the filter was washed twice with 5 mL of dehydrated toluene and then washed twice with 5 mL of dehydrated hexane. The washed powder was dried under reduced pressure for 2 hours to give 0.246 g of a powdery supported catalyst. The powder was mixed together with mineral oil to give a mineral oil slurry of the solid catalyst component (the metallocene catalyst-1) having a concentration of the solid catalyst component of 5.00 mass%.

[Polymerization Example A-3]

A 3.4 L internal volume SUS autoclave thoroughly purged with nitrogen was charged with a mixture of 153.5 mg of the mineral oil slurry of the solid catalyst component (the metallocene catalyst-1) prepared as described above and 1.5 mL of a decane solution of triethylaluminum (Al = 0.5 M). Next, 600 g of liquid propylene and 6.5 L of hydrogen were fed. Polymerization was carried out at 60°C for 40 minutes while performing sufficient stirring. The resultant polymer was dried under reduced pressure at 80°C for 10 hours. Thus, 156.5 g of a propylene polymer (A-3) was obtained.

[Synthesis Example 2] Synthesis of transition metal complex (metallocene compound (M))

In accordance with Synthesis Example 2 of WO 2014/142111, [3-(2',7'-di-tert-butylfluorenyl)(1,1,3-trimethyl-5-(1-adamantyl)-1,2,3,3a-tetrahydropentalene)]zirconium dichloride (metallocene compound (M-2)) was synthesized.

[Preparation 3 of solid catalyst component (metallocene catalyst)]

A reactor was charged with the toluene slurry of the solid polyaluminoxane composition obtained in [Preparation 2 of solid cocatalyst component] (Al concentration = 1.65 mmol/mL, 2.45 mL, 4.05 mmol) and 16.5 mL of toluene. There was added 1.00 mL of a toluene solution containing 10.0 mg of the metallocene compound (M-2) from Synthesis Example 2. The mixture was stirred at room temperature for 1 hour. The slurry thus obtained was filtered through a filter, and the powder on the filter was washed twice with 5 mL of dehydrated toluene and then washed twice with 5 mL of dehydrated hexane. The washed powder was dried under reduced pressure for 2 hours to give 0.235 g of a powdery supported catalyst. The powder was mixed together with mineral oil to give a mineral oil slurry of the solid catalyst component (the metallocene catalyst-2) having a concentration of the solid catalyst component of 5.00 mass%.

[Polymerization Example A-4]

A 3.4 L internal volume SUS autoclave thoroughly purged with nitrogen was charged with a mixture of 321.2 mg of the mineral oil slurry of the solid catalyst component (the metallocene catalyst-2) prepared as described above and 1.5 mL of a decane solution of triethylaluminum (Al = 0.5 M). Next, 600 g of liquid propylene and 3.0 L of hydrogen were fed. Polymerization was carried out at 70°C for 40 minutes while performing sufficient stirring. The resultant polymer was dried under reduced pressure at 80°C for 10 hours. Thus, 102.1 g of a propylene polymer (A-4) was obtained.

[Synthesis Example 3] Synthesis of transition metal complex (metallocene compound (M))

In accordance with Synthesis Example 4 of WO 2006/025540, diphenylmethylene(3-tert-butyl-5-ethylcyclopentadienyl)(2,7-di-tert-butylfluorenyl)zirconium dichloride (metallocene compound (M-3)) was synthesized.

[Preparation 3 of solid cocatalyst component]

A solid polyaluminoxane composition for use as a solid cocatalyst component was prepared based on a known method (WO 2014/123212). Specifically, a 1 L glass autoclave equipped with a stirrer was charged with 83 mL of toluene, and a 20 wt% toluene solution of polymethylaluminoxane manufactured by Albemarle (Al concentration = 3.01 mmol/mL, 167 mL, 502.7 mmol). The temperature was increased to 70°C while performing stirring. Subsequently, a toluene solution (21.5 mL) of 2-phenyl-2-propanol (10.2 g, 75.3 mmol) was added over a period of 80 minutes. After the addition, the mixture was stirred at 70°C for 10 minutes, heated to 140°C at a heat-up rate of 1.0°C/min, and reacted at 140°C for 4 hours. The temperature was lowered to 80°C, and the supernatant (125 mL) was removed by decantation. The solid polyaluminoxane that had precipitated was washed twice with toluene (400 mL) at 80°C, and the total volume was adjusted to 300 mL by the addition of toluene. A toluene slurry of the solid polyaluminoxane composition was thus obtained.

The particle size distribution of the solid polyaluminoxane composition obtained was measured. The volume median diameter (D50) was 26.9 μm, and the uniformity index was 0.229.

[Preparation 4 of solid catalyst component (metallocene catalyst)]

A reactor was charged with the toluene slurry of the solid polymethylaluminoxane composition prepared as described above (Al concentration = 1.77 mmol/mL, 4.65 mL, 8.23 mmol) and 13.4 mL of toluene. There was added 2.00 mL of a toluene solution containing 20.0 mg of the metallocene compound (M-3) from Synthesis Example 3. The mixture was stirred at room temperature for 1 hour. The slurry thus obtained was filtered through a filter, and the powder on the filter was washed twice with 5 mL of dehydrated toluene and then washed twice with 5 mL of dehydrated hexane. The washed powder was dried under reduced pressure for 2 hours to give 0.409 g of a powdery supported catalyst. The powder was mixed together with mineral oil to give a mineral oil slurry of the solid catalyst component (the metallocene catalyst-3) having a concentration of the solid catalyst component of 5.00 mass%.

[Polymerization Example A-5]

A 3.4 L internal volume SUS autoclave thoroughly purged with nitrogen was charged with a mixture of 824.1 mg of the mineral oil slurry of the solid catalyst component (the metallocene catalyst-3) prepared as described above and 1.5 mL of a decane solution of triethylaluminum (Al = 0.5 M). Next, 600 g of liquid propylene and 0.7 L of hydrogen were fed. Polymerization was carried out at 50°C for 40 minutes while performing sufficient stirring. The resultant polymer was dried under reduced pressure at 80°C for 10 hours. Thus, 78.4 g of a propylene polymer (A-5) was obtained.

[Polymerization Example a-1]

A 3.4 L internal volume SUS autoclave thoroughly purged with nitrogen was charged with a mixture of 226.5 mg of the mineral oil slurry of the prepolymerized catalyst component (BPP-1) prepared as described hereinabove and 1.5 mL of a decane solution of triethylaluminum (Al = 0.5 M) . Next, 600 g of liquid propylene and 15.0 L of hydrogen were fed. Polymerization was carried out at 60°C for 40 minutes while performing sufficient stirring. The resultant polymer was dried under reduced pressure at 80°C for 10 hours. Thus, 135.4 g of a propylene polymer (a-1) was obtained.

[Polymerization Example B-1]

⟨Preparation of prepolymerized catalyst (b-1)⟩

The procedures described in [Example 1] ([0157] to [0161]) of WO 2019/004418 were repeated to produce a solid titanium catalyst component (i-1) containing 1.3 wt% of titanium, 20 wt% of magnesium, 13.8 wt% of diisobutyl phthalate and 0.8 wt% of diethyl phthalate. Incidentally, the present inventors assume that the diethyl phthalate detected in the solid titanium catalyst component (i-1) probably resulted from the transesterification of diisobutyl phthalate and ethanol used for the production of solid titanium, accompanying the process of production of the solid titanium catalyst component.

90.0 g of the solid titanium catalyst component (i-1), 66.7 mL of triethylaluminum, 15.6 mL of isopropylpyrrolidinodimethoxysilane and 10 L of heptane were inserted into a 20 L internal volume autoclave equipped with a stirrer. While maintaining the internal temperature at 15 to 20°C, 900 g of propylene was inserted. The reaction was carried out for 100 minutes while performing stirring. After the completion of the polymerization, the solid component was precipitated. The supernatant was removed, and the residue was washed twice with heptane. The solid component thus obtained was resuspended in purified heptane. The concentration of the solid catalyst component was adjusted to 1.0 g/L by the addition of heptane. A prepolymerized catalyst (b-1) was thus obtained.

⟨Production of propylene polymer⟩

A 500 L internal volume polymerization tank equipped with a stirrer was charged with 300 L of liquefied propylene. While maintaining this liquid level, polymerization was performed at a temperature of 70°C by continuously supplying 100 kg/h of liquefied propylene, 1.0 g/h of the prepolymerized catalyst (b-1), 8.9 mL/h of triethylaluminum and 2.8 mL/h of isopropylpyrrolidinodimethoxysilane. Further, hydrogen was continuously supplied to keep the hydrogen concentration in the gas phase in the polymerization tank at 6.9 mol%. The slurry thus obtained was deactivated, and propylene was evaporated. A powdery propylene polymer (B-1) was thus obtained. The propylene polymer (B-1) obtained had an MFR of 29 g/10 min.

[Polymerization Example B-2]

A 500 L internal volume polymerization tank equipped with a stirrer was charged with 300 L of liquefied propylene. While maintaining this liquid level, polymerization was performed at a temperature of 60°C by continuously supplying 100 kg/h of liquefied propylene, 1.0 g/h of the prepolymerized catalyst (b-1), 8.9 mL/h of triethylaluminum and 2.8 mL/h of isopropylpyrrolidinodimethoxysilane. Further, hydrogen was continuously supplied to keep the hydrogen concentration in the gas phase in the polymerization tank at 20.1 mol%. The slurry thus obtained was deactivated, and propylene was evaporated. A powdery propylene polymer (B-2) was thus obtained. The propylene polymer (B-2) obtained had an MFR of 245 g/10 min.

[Polymerization Example B-3]

⟨Preparation of prepolymerized catalyst (b-2)⟩

120.0 g of the solid titanium catalyst component (i-1), 88.9 mL of triethylaluminum, 25.3 mL of diethylaminotriethoxysilane and 10 L of heptane were inserted into a 20 L internal volume autoclave equipped with a stirrer. While maintaining the internal temperature at 15 to 20°C, 720 g of propylene was inserted. The reaction was performed for 100 minutes while performing stirring. After the completion of the polymerization, the solid component was precipitated, the supernatant was removed, and the residue was washed twice with heptane. The solid component thus obtained was resuspended in purified heptane. The concentration of the solid catalyst component was adjusted to 1.0 g/L by the addition of heptane. A prepolymerized catalyst (b-2) was thus obtained.

⟨Production of propylene polymer⟩

A 500 L internal volume polymerization tank equipped with a stirrer was charged with 300 L of liquefied propylene. While maintaining this liquid level, polymerization was performed at a temperature of 70°C by continuously supplying 130 kg/h of liquefied propylene, 1.8 g/h of the prepolymerized catalyst (b-2), 17.7 mL/h of triethylaluminum and 6.5 mL/h of diethylaminotriethoxysilane. Further, hydrogen was continuously supplied to keep the hydrogen concentration in the gas phase in the polymerization tank at 2.5 mol%. The slurry thus obtained was deactivated, and propylene was evaporated. A powdery propylene polymer (B-3) was thus obtained. The propylene polymer (B-3) obtained had an MFR of 31 g/10 min.

[Polymerization Example B-4]

A 58 L internal volume polymerization vessel equipped with a stirrer was filled by continuous supply of 45 kg/h of propylene, 450 NL/h of hydrogen, 0.60 g/h of the prepolymerized catalyst (b-2), 3.3 mL/h of triethylaluminum and 2.5 mL/h of diethylaminotriethoxysilane, and polymerization was performed in the absence of a gas phase. The temperature of the tubular polymerizer was 70°C, and the pressure was 3.5 MPa/G.

The slurry thus obtained was fed to a 70 L internal volume polymerization vessel equipped with a stirrer for further polymerization. To the polymerization vessel, 43 kg/h of propylene and hydrogen at a rate to keep the hydrogen concentration in the gas phase at 8.9 mol% were continuously supplied. The polymerization was carried out at a polymerization temperature of 66.5°C and a pressure of 3.2 MPa/G.

The slurry thus obtained was deactivated, and propylene was evaporated. A powdery propylene polymer (B-4) was thus obtained. The propylene polymer (B-4) obtained had an MFR of 230 g/10 min.

[Production of propylene/ethylene block copolymer]

[Polymerization Example B-5]

A 58 L internal volume polymerization vessel equipped with a stirrer was filled by continuous supply of 45 kg/h of propylene, 450 NL/h of hydrogen, 0.60 g/h of the prepolymerized catalyst (b-2), 3.3 mL/h of triethylaluminum and 2.5 mL/h of diethylaminotriethoxysilane, and polymerization was performed in the absence of a gas phase. The temperature of the tubular polymerizer was 70°C, and the pressure was 3.5 MPa/G.

The slurry thus obtained was fed to a 70 L internal volume polymerization vessel equipped with a stirrer for further polymerization. To the polymerization vessel, 43 kg/h of propylene and hydrogen at a rate to keep the hydrogen concentration in the gas phase at 8.9 mol% were continuously supplied. The polymerization was carried out at a polymerization temperature of 66.5°C and a pressure of 3.2 MPa/G.

The slurry thus obtained was added to a 2.4 L internal volume liquid transfer tube and was gasified to perform gas-solid separation. The polypropylene homopolymer powder was transferred to a 480 L internal volume gas phase polymerizer, and ethylene/propylene block copolymerization was performed. Propylene, ethylene and hydrogen were continuously supplied so that the gas composition in the gas phase polymerizer would be ethylene/(ethylene + propylene) = 0.239 (by mol) and hydrogen/ethylene = 0.0043 (by mol). The polymerization was carried out at a polymerization temperature of 70°C and a pressure of 0.7 MPa/G.

The slurry thus obtained was deactivated and was gasified for gas-solid separation. Vacuum drying was performed at 80°C. Thus, a propylene/ethylene block copolymer (B-5) having a polypropylene moiety and an ethylene/propylene copolymer moiety was obtained. Characteristics of the block copolymer (B-5) (the propylene polymer (B-5)) obtained were as follows.

MFR (230°C, 2.16 kg) = 85 g/10 min

Mn = 22000
Mw/Mn = 5.4
Meso pentad fraction (mmmm) of homo PP moiety = 97.8%
Proportion of 23°C n-decane-soluble components = 11 mass%
Ethylene content in 23°C n-decane-soluble components = 40 mol%
Intrinsic viscosity [η] of 23°C n-decane-soluble components = 7.8 dL/g

The properties obtained in Polymerization Examples above are described in a table below together with properties of Hi-WAX (registered trademark) NP055 and NP805 manufactured by MITSUI CHEMICALS, INC.

⟨Production of propylene polymer⟩

[Polymerization Example B-6]

A 3.4 L internal volume SUS autoclave thoroughly purged with nitrogen was charged with a mixture of 557.1 mg of the mineral oil slurry of the prepolymerized catalyst component (BPP-1) prepared as described hereinabove and 1.5 mL of a decane solution of triethylaluminum (Al = 0.5 M). Next, 600 g of liquid propylene and 0.6 L of hydrogen were fed. Polymerization was carried out at 70°C for 40 minutes while performing sufficient stirring. The resultant polymer was dried under reduced pressure at 80°C for 10 hours. Thus, 305.2 g of a propylene polymer (B-6) was obtained.

[Table 1]

Table 1

| | | Polym. Ex. A-1 | Polym. Ex. A-2 | Polym. Ex. A-3 | Polym. Ex. A-4 | Polym. Ex. A-5 | Polym. Ex. a-1 | Hi-WAX | |
|---|---|---|---|---|---|---|---|---|---|
| Propylene polymer | | A-1 | A-2 | A-3 | A-4 | A-5 | a-1 | NP055 | NP805 |
| Mw (× $10^4$) | | 3.2 | 2.7 | 1.6 | 2.6 | 3.6 | 0.98 | 0.80 | 3.3 |
| Mn (× $10^4$) | | 1.3 | 1.1 | 0.59 | 0.96 | 1.5 | 0.41 | 0.36 | 1.5 |
| Mw/Mn | | 2.6 | 2.5 | 2.8 | 2.8 | 2.4 | 2.4 | 2.2 | 2.2 |
| mmmm | % | 98.0 | 97.8 | 97.5 | 90.5 | 92.2 | 97.2 | 94.0 | 95.0 |
| Tm | °C | 159 | 157 | 153 | 145 | 149 | 151 | 140 | 148 |
| Proportion of components eluted at not more than -20°C in TREF | mass% | 0.6 | 0.9 | 2.9 | 1.6 | 1.5 | 4.2 | 11.4 | 4.7 |
| Irregular bonds | mol% | 0.0* | 0.0* | 0.0* | 0.1 | 0.0* | 0.0* | 0.0* | 0.0* |
| Bulk density | g/cm$^3$ | 0.47 | 0.43 | 0.32 | 0.33 | 0.35 | 0.33 | 0.49 | 0.49 |
| Microparticle content | mass% | 0.0* | 0.0* | 0.33 | 0.25 | 0.0* | 0.14 | 3.6 | 6.6 |
| *Rounded to 0.0 or not detected. | | | | | | | | | |

[Table 2]

Table 2

| | | Polym. Ex. B-1 | Polym. Ex. B-2 | Polym. Ex. B-3 | Polym. Ex. B-4 | Polym. Ex. B-6 |
|---|---|---|---|---|---|---|
| Propylene polymer | | B-1 | B-2 | B-3 | B-4 | B-6 |
| MFR | g/10 min | 29 | 245 | 31 | 230 | 33 |
| mmmm | % | 98.3 | 98.3 | 98.1 | 97.8 | 98.3 |
| Mn (× $10^4$) | | 3.2 | 1.7 | 4.8 | 2.3 | 7.0 |
| Mw/Mn | | 6. 6 | 7.3 | 4.4 | 5.0 | 2.4 |

[Example 1]

76 Parts of the propylene polymer (B-1), 4 parts of the propylene polymer (A-1), 20 parts of talc ("JM-209" manufactured by ASADA MILLING CO., LTD.), 0.1 part of heat stabilizer "IRGANOX 1010" (BSF), 0.1 part of heat stabilizer "IRGAFOS 168" (BSF) and 0.1 part of calcium stearate were mixed together with a tumbler. Next, the mixture was melt-kneaded with a twin-screw kneading extruder under the following conditions to give pellets of a propylene resin composition.

(Melt-kneading conditions)

Co-rotating twin-screw kneading extruder: "KZW-15" manufactured by TECHNOVEL CORPORATION
Kneading temperature: 190°C
Screw rotational speed: 500 rpm
Feeder rotational speed: 50 rpm

[Examples 2 to 20 and Comparative Examples 1 to 20]

Pellets of propylene resin compositions were obtained in the same manner as in Example 1, except that the formulations except the heat stabilizers and calcium stearate were changed as described in Tables 3 to 12.
The components described in the tables are as follows.

NP055: Polypropylene "Hi-WAX NP055" (manufactured by MITSUI CHEMICALS, INC.)
NP805: Polypropylene "Hi-WAX NP805" (manufactured by MITSUI CHEMICALS, INC.)
Propylene/ethylene copolymer rubber: "Vistamaxx 6102" (manufactured by Exxon Mobil Japan)
Ethylene/butene copolymer rubber: "TAFMER A-1050S" (manufactured by MITSUI CHEMICALS, INC.)
Ethylene/octene copolymer rubber: "ENGAGE 8842" (manufactured by Dow Chemical Japan)
Talc-1: "JM-209" (manufactured by ASADA MILLING CO., LTD.)
Talc-2: "HAR W92" (manufactured by IMERYS Minerals Japan K.K.)
MOS-HIGE: "MOS-HIGE" (basic magnesium sulfate inorganic fibers, manufactured by Ube Material Industries, Ltd.)
Nucleating agent: Phosphate nucleating agent "ADK STAB NA-11" (manufactured by ADEKA CORPORATION)

The propylene resin compositions obtained in Examples and Comparative Examples were formed with an injection molding machine under the following conditions to give test pieces having shapes described later.

(JIS small test pieces, small square plates/injection molding conditions)

Injection molding machine: "EC40" manufactured by Toshiba Machine Co., Ltd.
Cylinder temperature: 190°C
Mold temperature: 40°C
Injection time-dwell time: 13 seconds (primary filling time: 1 second)
Cooling time: 15 seconds

〈Flexural modulus (FM) and flexural strength (FS)〉

The flexural modulus FM (MPa) and the flexural strength (FS) (MPa) were measured in accordance with JIS K7171 under the following conditions.

Test piece: 10 mm (width) × 80 mm (length) × 4 mm (thickness)
Bending speed: 2 mm/min
Bending span: 64 mm

〈Charpy impact value〉

The Charpy impact value (kJ/$m^2$) was measured in accordance with JIS K7111 at a temperature of 23°C or -

30°C with respect to a 10 mm (width) × 80 mm (length) × 4 mm (thickness) test piece notched by machining.

⟨Hot deformation temperature (HDT)⟩

The hot deformation temperature was measured in accordance with JIS K7191-1. Specifically, both ends of a test piece were supported in a heating bath and, at the bottom of the heating bath, a predetermined bending stress (a constant load of 0.45 MPa) was applied to the center of the test piece by means of a loading rod. The temperature of a heating medium was increased at a rate of 2°C/min. The temperature of the heating medium at the time when the deflection of the test piece reached a predetermined amount was adopted as the hot deformation temperature.

⟨Coefficient of linear expansion (average)⟩

The coefficient of linear expansion ($10^{-5}$/°C) was evaluated by a TMA method (measurement range: -30 to 80°C) in accordance with JIS Z7197. Test pieces having an approximate size of 10 mm × 5 mm × 2 mm thickness were cut out from the vicinity of the center of a small square plate (30 mm (width) × 30 mm (length) × 2 mm (thickness)) in the MD direction and in the TD direction. The test pieces that had been cut out were annealed at 120°C for 2 hours, and the coefficient of linear expansion was measured with respect to each of the test piece cut out in the MD direction and the test piece cut out in the TD direction. The results of the two test pieces were averaged.

[Table 3]

Table 3

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Propylene polymer (B-1) | phr | 76 | 72 | 68 | 64 | 78 | 76 | 76 | 76 |
| Propylene polymer (B-2) | phr | | | | | | | | |
| Propylene polymer (A-1) | phr | 4 | 8 | 12 | 16 | | | | |
| Propylene polymer (A-2) | phr | | | | | 2 | 4 | | |
| Propylene polymer (A-3) | phr | | | | | | | 4 | |
| Propylene polymer (A-4) | phr | | | | | | | | 4 |
| NP055 | phr | | | | | | | | |
| NP805 | phr | | | | | | | | |
| Talc-1 | phr | 20 | 20 | 20 | 20 | 20 | 20 | 20 | 20 |
| MFR | g/10 min | 39 | 48 | 59 | 76 | 37 | 40 | 41 | 40 |
| FS | MPa | 65 | 65 | 63 | 62 | 65 | 65 | 65 | 65 |
| FM | MPa | 4060 | 4070 | 4070 | 4080 | 4070 | 4100 | 4130 | 4020 |

Table 3 (continued)

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Propylene polymer (B-1) | phr | 80 | | 76 | 72 | 68 | 76 | 72 |
| Propylene polymer (B-2) | phr | | 80 | | | | | |
| Propylene polymer (A-1) | phr | | | | | | | |
| Propylene polymer (A-2) | phr | | | | | | | |
| Propylene polymer (A-3) | phr | | | | | | | |
| Propylene polymer (A-4) | phr | | | | | | | |
| NP055 | phr | | | 4 | 8 | 12 | | |
| NP805 | phr | | | | | | 4 | 8 |
| Talc-1 | phr | 20 | 20 | 20 | 20 | 20 | 20 | 20 |
| MFR | g/10 min | 32 | 201 | 41 | 53 | 68 | 39 | 48 |
| FS | MPa | 64 | 46 | 64 | 59 | 58 | 65 | 63 |
| FM | MPa | 3890 | 4110 | 3940 | 3870 | 3770 | 3910 | 3780 |

[Table 4]

Table 4

| | | Ex. 9 | Ex. 10 | Ex. 11 | Comp. Ex. 8 |
|---|---|---|---|---|---|
| Propylene polymer (B-3) | phr | 79 | 78 | 76 | 80 |
| Propylene polymer (A-1) | phr | 1 | 2 | 4 | |
| Talc-1 | phr | 20 | 20 | 20 | 20 |
| MFR | g/10 min | 35 | 37 | 39 | 34 |
| FM | MPa | 3780 | 3820 | 3830 | 3710 |

[Table 5]

Table 5

| | | Ex. 12 | Comp. Ex. 9 | Comp. Ex. 10 |
|---|---|---|---|---|
| Propylene polymer (B-5) | phr | 56 | 56 | 59 |
| Propylene polymer (B-4) | phr | | 4 | 4 |
| Propylene polymer (A-1) | phr | 4 | | |
| Ethylene/butene copolymer rubber | phr | 20 | 20 | 17 |
| Talc-2 | phr | 20 | 20 | 20 |
| MFR | g/10 min | 34 | 28 | 31 |
| FM | MPa | 2380 | 2270 | 2360 |
| Charpy impact value (23°C) | $kJ/m^2$ | 7.8 | 13.5 | 6.3 |
| HDT at 0.45 MPa | °c | 125 | 118 | 121 |
| Coefficient of linear expansion (average) | | 4.9 | 5.1 | 5.2 |

[Table 6]

Table 6

| | | Ex. 13 | Ex. 14 | Comp. Ex. 11 | Comp. Ex. 12 |
|---|---|---|---|---|---|
| Propylene polymer (B-3) | phr | 95 | 95 | 100 | 100 |
| Propylene polymer (A-1) | phr | 5 | 5 | | |
| Nucleating agent (NA-11) | phr | | 0.1 | | 0.1 |
| MFR | g/10 min | 37 | 37 | 30 | 33 |
| HDT at 0.45 MPa | °c | 98 | 130 | 90 | 123 |

[Table 7]

Table 7

| | | Ex. 15 | Comp. Ex. 13 | Comp. Ex. 14 | Comp. Ex. 15 |
|---|---|---|---|---|---|
| Propylene polymer (B-5) | phr | 52 | 52 | 50 | 52 |
| Propylene polymer (A-1) | phr | 8 | | | |
| NP055 | phr | | 8 | 8 | |
| NP805 | phr | | | | 8 |
| Ethylene/butene copolymer rubber | phr | 20 | 20 | 22 | 20 |
| Talc-1 | phr | 10 | 10 | 10 | 10 |
| MOS-HIGE | phr | 10 | 10 | 10 | 10 |
| MFR | g/10 min | 53 | 56 | 48 | 51 |
| FM | MPa | 2930 | 2780 | 2640 | 2720 |
| Charpy impact value (-30°C) | $kJ/m^2$ | 2.3 | 1.7 | 1.9 | 2.2 |

[Table 8]

Table 8

| | | Ex. 16 | Comp. Ex. 16 |
|---|---|---|---|
| Propylene polymer (B-6) | phr | 76 | 80 |
| Propylene polymer (A-1) | phr | 4 | |
| Talc-1 | phr | 20 | 20 |
| MFR | g/10 min | 42 | 35 |
| FM | MPa | 3650 | 3560 |
| Charpy impact value (-30°C) | $kJ/m^2$ | 2.4 | 2.3 |

[Table 9]

Table 9

| | | Ex. 17 | Comp. Ex. 17 | Comp. Ex. 18 |
|---|---|---|---|---|
| Propylene polymer (B-6) | phr | 46 | 46 | 44 |
| Propylene polymer (A-1) | phr | 8 | | |
| Propylene polymer (a-1) | phr | | 8 | 8 |

(continued)

| | | Ex. 17 | Comp. Ex. 17 | Comp. Ex. 18 |
|---|---|---|---|---|
| Propylene/ethylene copolymer rubber | phr | 6 | 6 | 6 |
| Ethylene/octene copolymer rubber | phr | 20 | 20 | 22 |
| Talc-1 | phr | 20 | 20 | 20 |
| MFR | g/10 min | 26 | 27 | 25 |
| FM | MPa | 1850 | 1870 | 1720 |
| Charpy impact value (23°C) | $kJ/m^2$ | 50.7 | 44.4 | 52.4 |
| Charpy impact value (-30°C) | $kJ/m^2$ | 3.6 | 3.0 | 3.7 |

[Table 10]

Table 10

| | | Ex. 18 | Comp. Ex. 19 |
|---|---|---|---|
| Propylene polymer (B-4) | phr | 75 | 80 |
| Propylene polymer (A-1) | phr | 5 | |
| Talc-2 | phr | 20 | 20 |
| MFR | g/10 min | 230 | 180 |
| FM | MPa | 4330 | 4230 |
| Charpy impact value (23°C) | $kJ/m^2$ | 1.5 | 1.3 |

[Table 11]

Table 11

| | | Ex. 19 | Comp. Ex. 20 |
|---|---|---|---|
| Propylene polymer (B-3) | phr | 40 | 55 |
| Propylene polymer (A-1) | phr | 15 | |
| Propylene/ethylene copolymer rubber | phr | 15 | 15 |
| Talc-2 | phr | 30 | 30 |
| MFR | g/10 min | 147 | 14 |
| FM | MPa | 3650 | 3280 |
| HDT (0.45 MPa) | °C | 139 | 131 |

[Table 12]

Table 12

| | | Ex. 20 | Comp. Ex. 8 |
|---|---|---|---|
| Propylene polymer (B-3) | phr | 76 | 80 |
| Propylene polymer (A-5) | phr | 4 | |
| Talc-1 | phr | 20 | 20 |
| MFR | g/10 min | 42 | 34 |
| FM | MPa | 3770 | 3710 |

From the results in Table 3, Table 4, Table 8, Table 10, Table 11 and Table 12, shaped articles having excellent rigidity can be obtained by using the propylene polymer (A). Further, the results in Tables 5 to 7 and Table 9 show that shaped articles that have an excellent balance between rigidity and impact resistance and are also excellent in heat resistance can be obtained by using the propylene polymer (A).

## Claims

1. A propylene resin composition comprising a propylene polymer (A) satisfying requirements (1) to (3) below:

   (1) having a number average molecular weight (Mn) measured by gel permeation chromatography (GPC) of 5000 to 22000;
   (2) having a ratio (Mw/Mn) of a weight average molecular weight (Mw) to a number average molecular weight (Mn) measured by gel permeation chromatography (GPC) being 1.2 to 3.5; and
   (3) having a proportion of a component eluted at a temperature of not more than -20°C in temperature rising elution fractionation (TREF) being not more than 3.5 mass%.

2. The propylene resin composition according to Claim 1, wherein the propylene polymer (A) has a meso pentad fraction (mmmm) determined by $^{13}C$-NMR of 90.0 to 100%.

3. The propylene resin composition according to Claim 1 or 2, wherein the propylene polymer (A) has a melting point (Tm) measured with a differential scanning calorimeter (DSC) of not less than 140°C.

4. The propylene resin composition according to any one of Claims 1 to 3, wherein the propylene polymer (A) has a total proportion of irregular bonds stemming from 2,1-insertion and 1,3-insertion in all propylene units determined by $^{13}C$-NMR being not more than 0.3 mol%.

5. The propylene resin composition according to any one of Claims 1 to 4, wherein the propylene polymer (A) has a content of propylene-derived structural units being not less than 98.0 mol%.

6. The propylene resin composition according to any one of Claims 1 to 5, wherein the propylene polymer (A) is in the form of propylene polymer (A) particles having a bulk density of not less than 0.20 (g/cm$^3$).

7. The propylene resin composition according to any one of Claims 1 to 6, wherein the propylene polymer (A) is in the form of propylene polymer (A) particles having a microparticle content as measured by method (i) below of not more than 3.0 mass%:
   [Method (i)]

   The polymer particles are shaken on a sieve having an opening size of 100 μm for 5 minutes; the mass is measured of the polymer particles remaining on the sieve and of the polymer particles that have passed through the sieve; and the microparticle content is calculated from the following equation:

$$\text{Microparticle content (mass\%)} = W1/(W1 + W2) \times 100$$

   W1: mass (g) of the polymer particles that have passed through the sieve with an opening size of 100 μm
   W2: mass (g) of the polymer particles remaining on the sieve having an opening size of 100 μm.

8. The propylene resin composition according to any one of Claims 1 to 7, which comprises 1 to 99 mass% of the propylene polymer (A) and 1 to 99 mass% of a propylene polymer (B) satisfying requirement (4) below:
   (4) having a ratio (Mw/Mn) of a weight average molecular weight (Mw) to a number average molecular weight (Mn) measured by gel permeation chromatography (GPC) being 1.2 to 3.5, and having the number average molecular weight (Mn) being more than 22000.

9. The propylene resin composition according to any one of Claims 1 to 7, which comprises 1 to 99 mass% of the propylene polymer (A) and 1 to 99 mass% of a propylene polymer (B) satisfying requirement (5) below:
   (5) having a ratio (Mw/Mn) of a weight average molecular weight (Mw) to a number average molecular weight (Mn) measured by gel permeation chromatography (GPC) being more than 3.5.

**10.** The propylene resin composition according to Claim 8 or 9, wherein the propylene polymer (B) is a propylene block copolymer comprising 50 to 99 mass% of a propylene homopolymer moiety (B1) and 1 to 50 mass% of a propylene/α-olefin copolymer moiety (B2);

the propylene homopolymer moiety (B1) is composed of a propylene homopolymer having a meso pentad fraction (mmmm) determined by $^{13}C$-NMR of 90.0 to 100%; and
the propylene/α-olefin copolymer moiety (B2) comprises 40.0 to 90.0 mol% of propylene-derived structural units and 10.0 to 60.0 mol% of structural units derived from a C2-C20 α-olefin other than propylene.

**11.** The propylene resin composition according to any one of Claims 8 to 10, wherein the propylene polymer (B) has a meso pentad fraction (mmmm) determined by $^{13}C$-NMR of 98.0 to 100%.

**12.** The propylene resin composition according to any one of Claims 1 to 11, which comprises an inorganic filler in the range of 0.01 to 70 mass%.

**13.** The propylene resin composition according to any one of Claims 1 to 12, which comprises inorganic fibers in the range of 0.5 to 70 mass%.

**14.** The propylene resin composition according to any one of Claims 1 to 13, which comprises a nucleating agent in the range of 0.01 to 1 mass%.

**15.** A shaped article formed using at least the propylene resin composition described in any one of Claims 1 to 14.

**16.** The shaped article according to Claim 15, which is an automobile part.

**17.** A propylene polymer (A) satisfying requirements (1) to (3) below:

(1) having a number average molecular weight (Mn) measured by gel permeation chromatography (GPC) of 5000 to 22000;
(2) having a ratio (Mw/Mn) of a weight average molecular weight (Mw) to a number average molecular weight (Mn) measured by gel permeation chromatography (GPC) being 1.2 to 3.5; and
(3) having a proportion of a component eluted at a temperature of not more than -20°C in temperature rising elution fractionation (TREF) being not more than 3.5 mass%.

**18.** The propylene polymer (A) according to Claim 17, which has a meso pentad fraction (mmmm) determined by $^{13}C$-NMR of 90.0 to 100%.

**19.** The propylene polymer (A) according to Claim 17 or 18, which has a melting point (Tm) measured with a differential scanning calorimeter (DSC) of not less than 140°C.

**20.** The propylene polymer (A) according to any one of Claims 17 to 19, which has a total proportion of irregular bonds stemming from 2,1-insertion and 1,3-insertion in all propylene units determined by $^{13}C$-NMR being not more than 0.3 mol%.

**21.** The propylene polymer (A) according to any one of Claims 17 to 20, which has a content of propylene-derived structural units being not less than 98.0 mol%.

**22.** The propylene polymer (A) according to any one of Claims 17 to 21, which is in the form of propylene polymer (A) particles having a bulk density of not less than 0.20 (g/$cm^3$).

**23.** The propylene polymer (A) according to any one of Claims 17 to 22, which is in the form of propylene polymer (A) particles having a microparticle content as measured by method (i) below of not more than 3.0 mass%:
[Method (i)]

The polymer particles are shaken on a sieve having an opening size of 100 μm for 5 minutes; the mass is measured of the polymer particles remaining on the sieve and of the polymer particles that have passed through the sieve; and the microparticle content is calculated from the following equation:

$$\text{Microparticle content (mass\%)} = W1/(W1 + W2) \times 100$$

W1: mass (g) of the polymer particles that have passed through the sieve with an opening size of 100 μm
W2: mass (g) of the polymer particles remaining on the sieve having an opening size of 100 μm.

**INTERNATIONAL SEARCH REPORT**

International application No.
PCT/JP2020/011692

A. CLASSIFICATION OF SUBJECT MATTER
C08K 7/04(2006.01)i; C08L 23/10(2006.01)i; C08K 3/013(2018.01)i
FI: C08L23/10; C08K3/013; C08K7/04

According to International Patent Classification (IPC) or to both national classification and IPC

B. FIELDS SEARCHED

Minimum documentation searched (classification system followed by classification symbols)
C08K7/04; C08L23/10; C08K3/013

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2008-524431 A (DOW GLOBAL TECHNOLOGIES, INC.) 10.07.2008 (2008-07-10) tables 1-B-1 to 1-B-3, fig. 1, claims | 1-7, 12-23<br>8-11 |
| A | JP 8-231640 A (HOECHST AG.) 10.09.1996 (1996-09-10) entire text | 1-23 |
| A | JP 2009-299045 A (JAPAN POLYPROPYLENE CORPORATION) 24.12.2009 (2009-12-24) entire text | 1-23 |
| A | JP 2013-10890 A (JAPAN POLYPROPYLENE CORPORATION) 17.01.2013 (2013-01-17) entire text | 1-23 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 May 2020 (08.05.2020) | 19 May 2020 (19.05.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/011692

| Patent Documents referred in the Report | Publication Date | Patent Family | Publication Date |
|---|---|---|---|
| JP 2008-524431 A | 10 Jul. 2008 | US 2009/0105407 A1<br>table 1-B, fig. 1, claims<br>WO 2006/069205 A1<br>EP 1833939 A1<br>KR 10-2007-0087670 A<br>CN 101084286 A | |
| JP 8-231640 A | 10 Sep. 1996 | US 6407189 B1<br>entire text<br>EP 719802 A2<br>DE 4446923 A<br>TW 372980 B<br>KR 10-1996-0022601 A | |
| JP 2009-299045 A | 24 Dec. 2009 | (Family: none) | |
| JP 2013-10890 A | 17 Jan. 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014214202 A
- JP 2016084387 A
- JP 2007224179 A
- WO 200127124 A
- WO 2005121192 A
- WO 2006025540 A
- WO 2014050817 A
- WO 2014123212 A
- WO 2017150265 A
- JP H0278687 A
- WO 2010055652 A
- WO 2013146337 A
- JP H01501950 A
- JP H01502036 A
- JP H03179005 A
- JP H03179006 B
- JP H03207703 A
- JP H03207704 A
- US 5321106 A
- WO 2019004418 A
- JP H07145212 A
- WO 2014142111 A

### Non-patent literature cited in the description

- *Macromolecules,* 1975, vol. 8, 687